# EUROPÄISCHE PATENTSCHRIFT

(11) **EP 2 318 463 B1**
(45) Veröffentlichungstag und Bekanntmachung des Hinweises auf die Patenterteilung: **01.10.2014**
(21) Anmeldenummer: 09777041.6
(22) Anmeldetag: 08.07.2009
(51) Int. Cl.: C09C 1/00, C09C 1/62, C09C 1/64

(54) **METALLEFFEKTPIGMENTE, VERFAHREN ZU DEREN HERSTELLUNG SOWIE VERWENDUNG DERSELBEN UND PULVERLACK**
METAL EFFECT PIGMENTS, METHOD FOR THE PRODUCTION AND THE USE THEREOF AND POWDER COATING
PIGMENTS MÉTALLIQUES, PROCÉDÉ DE FABRICATION AINSI QU'UTILISATION DE CES PIGMENTS ET PEINTURE EN POUDRE

(30) Priorität: 08.07.2008 DE 102008031901
(43) Veröffentlichungstag der Anmeldung: 11.05.2011
(73) Patentinhaber: Eckart GmbH, 91235 Hartenstein (DE); BYK-Chemie GmbH, 46483 Wesel (DE)
(72) Erfinder: BUBAT, Alfred, 46487 Wesel (DE); GRIESEL, Wolfgang, 46499 Hamminkeln (DE); NGUYEN, Phu, Qui, 41238 Mönchengladbach (DE); KREMITZL, Hans-Jörg, 90542 Eckental (DE)
(74) Vertreter: Louis Pöhlau Lohrentz
(86) Internationale Anmeldenummer: PCT/EP2009/004944
(87) Internationale Veröffentlichungsnummer: WO 2010/003660

(56) Entgegenhaltungen:
- WO-A-2008/017364
- DE-A1- 19 820 112

## Beschreibung

Die Erfindung betrifft Metalleffektpigmente zur bevorzugten Verwendung in Pulverlacken. Weiterhin betrifft die Erfindung ein Verfahren zur Herstellung dieser Metalleffektpigmente und deren Verwendung in Pulverlacken, einen Pulverlack sowie die Verwendung dieser Pulverlacke.

Metalleffektpigmente geben Anwendungen, wie beispielsweise Lacken und Beschichtungen, glanzvolle, brillante Effekte und erfüllen funktionelle Aufgaben.

Wesentliche Aufgabe von Metalleffektpigmenten ist die gerichtete Reflexion von Licht an parallel ausgerichteten Pigmentplättchen. Die Besonderheit von derart pigmentierten Anwendungen ist deren ausgeprägte Winkelabhängigkeit des optischen Eindrucks, d.h. mit dem Betrachtungswinkel ändern sich auch die Helligkeit und gelegentlich auch der Farbton der Anwendung.

Pulverlacke finden als feste und lösungsmittelfreie Beschichtungsstoffe in der industriellen Serienfertigung zur Beschichtung von elektrisch leitfähigen und temperaturbeständigen Werkstoffen ständig zunehmende Verwendung. Die als Grundierung oder Einschichtdecklack eingesetzten Pulverlacke sind fast vollständig recyclebar.

Die umweltfreundlichen und vielseitig einsetzbaren Pulverlacke enthalten Bindemittel, Pigmente, Füllstoffe und Vernetzer sowie optional Additive.

Pulverlacke liegen in feinteiliger Form vor und werden in der Regel elektrostatisch auf unterschiedliche Substrate aufgebracht und durch Einbrennen oder durch Strahlungsenergie gehärtet.

Zur Herstellung von Pulverlacken werden im konventionellen Mischverfahren die, optional in einem Feststoffmischer vorgemischten, Lackrohstoffe in einen Extruder eingebracht und in der Schmelze bei 80 bis 140 °C homogenisiert. Das aus dem Extruder ausgetragene, gekühlte und zerkleinerte Extrudat wird so lange einem intensiven Mahlprozess unterzogen, bis die gewünschte Teilchengröße vorliegt.

Zur Pigmentierung von Pulverlacken finden neben handelsüblichen Buntpigmenten auch durch konventionelle Kugelmühlenvermahlung hergestellte Effektpigmente, wie beispielsweise plättchenförmige Metalleffektpigmente aus Aluminium, Kupfer, Kupfer-Zink-Legierungen oder Zink, Verwendung.

Die Verwendung von handelsüblichen, plättchenförmigen Metalleffektpigmenten in durch Mischverfahren hergestellten Pulverlacken ist insofern problematisch, da es durch die beim Extrusions- und Vermahlungsprozess auf die Pigmentplättchen einwirkenden Scherkräfte zu einer Beschädigung oder Zerstörung der Pigmentplättchen kommen kann, wodurch insbesondere der Glanz und somit auch die Optik der mit diesen Metalleffektpigmenten pigmentierten Anwendungen negativ beeinträchtigt wird. Dies geht bis zum vollständigen Verschwinden der typischen optischen Eigenschaften der Metalleffektpigmente (Brillanz, Glanz, Flop etc.) in der Pulverlackierung.

Um dies zu verhindern, werden beispielsweise die zur Pigmentierung von Pulverlacken eingesetzten Effektpigmente dem Basispulverlack erst nach der Vermahlung zugemischt. Ein wesentlicher Nachteil dieser als Dry-blend-Verfahren bekannten Pulverlackherstellung ist die während der Lackapplikation mögliche Separation von Pigment und Pulverlack durch das unterschiedliche Aufladeverhalten der einzelnen Lackbestandteile. Die Folge dieser Ab- oder Anreicherung von Pigment während der Pulverlackapplikation ist ein unregelmäßiger optischer Effekt bei dem lackierten Gegenstand. Zudem ist die vollständige Wiedergewinnung und Wiederverwendung des umweltschädlichen, sogenannten "Overspray" nicht möglich aufgrund der Separierung von Pigment und Bindemittel.

Ein weiteres Verfahren zur Pulverlackherstellung ist das sogenannte Bonding-Verfahren, bei dem das Pigment unter Erwärmen an den Partikeln des Basislackes fixiert wird. Die Herstellung von derartigen, für optisch hochwertige Beschichtungen einsetzbaren Bonding-Pulverlacken ist aber relativ kostenaufwendig.

Die derzeit kostengünstigsten Pulverlacke werden mittels des sogenannten Mischverfahrens hergestellt. Hierzu werden die Pigmente zusammen mit allen anderen Rohstoffen vermischt, extrudiert und vermahlen. Bei dieser Pulverlackherstellung entfallen die ansonsten erforderlichen Arbeitsschritte "Dry-Blending" bzw. "Bonding".

Zur Pigmentierung mit Metalleffektpigmenten von durch Mischverfahren hergestellten Pulverlacken werden beispielsweise staubfreie Goldbronze- und Aluminiumeffektpigment-Präparationen eingesetzt, welche unter der Bezeichnung "PowderSafe^{®}" von der Firma ECKART GmbH, 91235 Velden, kommerziell gehandelt werden. Die mit diesen plättchenförmigen Metallpigmenten pigmentierten Einschichtlackierungen weisen zwar eine sehr gute metallische Optik auf, sind aber für spezielle Einsatzzwecke nicht ausreichend abriebstabil. Auch können die mit diesen handelsüblichen Metalleffektpigmenten pigmentierten Anwendungen nicht zusätzlich mit einer Klarlackbeschichtung vor mechanischen und/oder chemischen Einflüssen geschützt werden, was bei einigen Außenanwendungen nötig ist. Der Grund dafür ist, dass die im Pulverlack eingebrachten Metalleffektpigmente weitgehend leafing-Eigenschaften aufweisen, d.h. die Pigmentplättchen während des Einbrennvorgangs im Lackfilm aufschwimmen und sich im Bereich der Filmoberfläche ausrichten und anordnen. Dadurch verhindern diese Pigmente dann eine effektive Anbindung des Klarlackes an den Basislack, d.h. die Abriebbeständigkeit des Pulverlackes ist nicht mehr gegeben.

Zur Pulverlackherstellung nach dem Bonding- oder Dry Blend-Verfahren werden weiterhin eine Vielzahl von oberflächenbeschichteten/-modifizierten Effektpigmenten eingesetzt. Diese handelsüblichen Pigmente sind jedoch nicht beständig gegenüber einer Beschädigung bzw. Zerstörung durch die bei der Extrusion/Vermahlung auftretenden Scherkräfte.

Solche Effektpigmente werden beispielsweise von der Firma Merck unter der Bezeichnung Iriodin^{®} gehandelt. Diese Perlglanzpigmente enthalten mit Metalloxiden beschichtete Glimmerplättchen.

Weiterhin sind von der Firma Merck oberflächenmodifizierte Perlglanzpigmente, die mit einer Polymerverbindung beschichtet und beispielsweise in der DE-A 43 17 019 beschrieben sind, auf dem Markt.

Zur Pigmentierung von Pulverlacken kommen auch beschichtete Al₂O₃-Plättchen, Wismutoxidchlorid (BiOCl). Aluminiumplättchen, Variochrom^{®}- oder Paliochrom^{®}-Pigmente von der Firma BASF, LCP-Pigmente (liquid crystal polymer-Pigmente) und beschichtete Glasplättchen oder Mehrschichtpigmente zum Einsatz.

Auch ist aus EP 1 174 474 B1 die Verwendung von mit niedermolekularen Polyethylen oder Polypropylen beschichteten SiO₂- oder Aluminium-Plättchen bekannt.

Dagegen betrifft die EP 1 558 684 B1 eine mit Silan modifizierte Pigmentzusammensetzung zur Verwendung in metallisierten Anstrichfarben, Drucktinten und Kunststoffmaterial. Zu deren Herstellung wird Aluminiumgrieß nach dem bekannten Hall-Verfahren in Gegenwart von Silan anstelle der üblicherweise bei diesem Mahlverfahren eingesetzten Fettsäuren vermahlen. Diese Aluminiumeffektpigmente sind aufgrund ihrer verbesserten Korrosionsbeständigkeit sowohl in wässrigen als auch in lösungsmittelhaltigen Beschichtungssystemen einsetzbar. Die optischen Pigmenteigenschaften sind vergleichbar mit denen von im konventionellen Nassmahlverfahren hergestellten Aluminiumeffektpigmenten.

Weiterhin sind in der EP 1 084 198 B1 Effektpigmente mit Orientierungshilfsmitteln modifizierter Oberfläche beschrieben. Das in monomerer oder polymerer Form vorliegende Orientierungshilfsmittel trägt mindestens zwei verschiedene funktionelle Gruppen, die durch einen Spacer voneinander getrennt sind. Eine der funktionellen Gruppen ist chemisch an das Pigment gebunden, die andere kann z.B. mit dem Bindemittel des das Pigment umgebenden Lackes in einer Art Vernetzungsreaktion reagieren und somit zur Stabilisierung des Effektpigments mit non-leafing-Eigenschaft beitragen.

Die DE 10 2005 037 611 A1 offenbart Metalleffektpigmente mit anorganisch/ organischer Mischschicht, welche sowohl eine hohe mechanische als auch eine gute Gasungsstabilität aufweisen. Hierzu sind organische Oligomere und/oder Polymere mit einem anorganischen Netzwerk, bestehend aus anorganischen Oxidkomponenten, zumindest teilweise kovalent über Netzwerkbildner, verbunden. Die Netzwerkbildner können auch organofunktionelle Silane sein. Die anorganische Oxidkomponente wird - bei Vorhandensein von SiO₂ - beispielsweise aus Tetraalkoxysilanen aufgebaut. Die Aufbringung einer anorganisch/organischen Mischschicht erfordert eine etwas aufwendigere Steuerung des Verfahrens, als dies bei Aufbringung einer Beschichtung aus nur einer Komponente.

Aus der EP 1 619 222 A1 sind Aluminiumeffektpigmente mit einer mit Silanen modifizierten Molybdän- und Siliziumoxidbeschichtung für wasserbasierende Lacksysteme bekannt.

EP 1 655 349 A1 betrifft überlackierbare Effektpulverlacke für eine gute Anhaftung des Klarlacks. Diese Effektpulverlacke enthalten Effektpigmente, die mit einer fluorhaltigen Polymerbeschichtung umhüllt sind, die allerdings keinen ausreichenden Schutz vor einer Zerstörung der Pigmente bei Scherbelastung bietet. Deshalb können diese Pigmente nur im Dry Blend- oder Bonding-Verfahren bei der Pulverlackherstellung eingearbeitet werden.

JP 2003213157A offenbart ein Metallic-Pigment für eine Pulverlackzusammensetzung mit hohem metallischem Glanz. Dieses in einschichtigen oder mehrschichtigen Pulverlackbeschichtungen einsetzbare Aluminiumpigment ist mit wenigstens einer eine fluorierte Alkylgruppe enthaltenden Harzkomponente beschichtet. Die hier offenbarten beschichteten Aluminiumeffektpigmente werden im Pulverlack mittels Dry-blending oder durch Bonding eingesetzt.

Weitere Pigmentpräparationen, die - außer Effektpigmenten und anderen Inhaltsstoffen - zusätzlich oberflächenaktive Substanzen, wie z.B. Alkylsilane, enthalten, sind in DE 100 46 152A1, EP 1 104 447 B1 und EP 1 200 527 B1 beschrieben.

Die EP 0 955 344 A2 offenbart mit Organosiloxan modifizierte Füllstoffe, die als Zusätze für Klebstoffe, Dichtungsmassen, Polymermassen, etc. verwendet werden.

Die EP 1 076 266 A1 offenbart einen schwarzen Toner, der Hämatit- öder Eisenoxidpartikel enthält, wobei die Partikel zunächst mit einer Schicht aus Organosilan und Polysiloxan und nachfolgend mit einer Rußschicht versehen sind.

Die US 2003/0161805 A1 offenbart ein beschichtetes Pulver zur Verwendung in Kosmetika. Bei dem Pulver kann es sich um eine Vielzahl von Farbpigmenten handeln, die mit einem Polysiloxan mit basischen Gruppen, insbesondere Aminogruppen, beschichtet sind. Das Verhältnis von Siloxygruppen ohne basische Gruppe zu Siloxygruppen mit basischer Gruppe liegt im Bereich von 5:1 zu 1:5 und beträgt vorzugsweise 1:1.

Die EP 1 690 884 A1 offenbart Organosilan-modifizierte Polysiloxane zur Oberflächenbeschichtung, beispielsweise von Füllstoffen und Pigmenten wie Titandioxidpigmenten, die sich dann aufgrund ihrer Hydrophobie gut in Kunststoffe einarbeiten lassen.

Die DE 198 20 112 A1 betrifft mit reaktiven Oberflächenmodifizierungsmitteln beschichtete Effektpigments. Die WO 2008/017364 A2 betrifft Oberflächenmodifizierte Nanopartikel.

Der vorliegenden Erfindung liegt die Aufgabe zugrunde, Metalleffektpigmente für Pulverlacke zur Verfügung zu stellen. Diese Metalleffektpigmente sollen insbesondere in durch Mischverfahren hergestellten Pulverlacken mit hoher Abriebstabilität und hochwertigen optischen Eigenschaften, insbesondere in kostengünstigen Einschichtlackierungen, einsetzbar sein. Darüber hinaus sollen die Metalleffektpigmente kostengünstig herstellbar sein.

Die Aufgabe wurde gelöst durch Bereitstellung von Metalleffektpigmenten mit plättchenförmigem metallischen Substrat, wobei die Metalleffektpigmente mindestens eine Metalloxidschicht aufweisen, wobei die Oberfläche der Metalloxidschicht kovalent gebundenes Polysiloxan der Formel I aufweist: 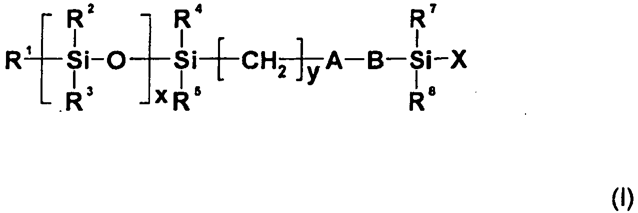 wobei
R¹ für einen gesättigten oder ungesättigten, geradkettigen oder verzweigten Alkylrest mit 1 bis 30 Kohlenstoffatomen und/oder einen Arylrest, Alkylarylrest der Arylalkylrest mit 6 bis 30 Kohlenstoffatomen steht;
R², R³, R⁴ und R⁵ unabhängig voneinander für gesättigte oder ungesättigte, geradkettige oder verzweigte Alkylreste mit 1 bis 6 Kohlenstoffatomen und/oder Arylreste, Alkylarylreste und/oder Arylalkylreste mit 6 bis 12 Kohlenstoffatomen stehen;
x = 1 bis 200;
y = 2 bis 30;
A für (CH₂)ₙ, O, S, (OCH₂CH₂)ₘ oder C₆R⁶₄ steht, wobei n = 0 oder 1 und m = 0 bis 30 und R⁶ für H und/oder Alkyl mit 1 bis 6 Kohlenstoffatomen steht;
B für (CH₂)_{z} oder (OCH₂CH₂)_{w} steht, wobei z = 0 bis 30 und w = 0 bis 30;
R⁷und R⁸ unabhängig voneinander für O oder einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen stehen; X für O oder OH steht und an die Pigmentoberfläche gebunden ist.

Die Bindung an die Pigmentoberfläche kann dabei kovalent, ionisch und/oder über van-der-Waals-Kräfte und/oder Wasserstoffbrücken erfolgen. Gemäß einer Variante erfolgt die Bindung an die Pigmentoberfläche, zu mindestens teilweise, durch eine kovalente Bindung.

Bevorzugte Weiterbildungen der erfindungsgemäßen Metalleffektpigmente sind in den Unteransprüchen 2 bis 8 angegeben.

Die Aufgabe wurde ferner gelöst durch Bereitstellung eines Verfahrens zur Herstellung der erfindungsgemäßen Metalleffektpigmente, wobei die Oberfläche der Metalloxidschicht mit einem Polysiloxan der Formel (II), 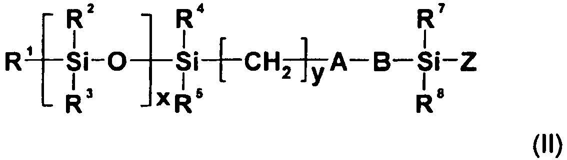 vorzugsweise unter hydrolytischen Bedingungen, umgesetzt wird, wobei Z für eine hydrolysierbare Gruppe steht und R⁷ und R⁸ unabhängig voneinander jeweils für eine hydrolysierbare Gruppe stehen oder R⁷ und R⁸ unabhängig voneinander für einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen stehen.

Die hydrolysierbare Gruppe Z umfaßt beispielsweise Hydroxy, Halogen, beispielsweise F, Cl, Br und/oder I, und/oder OR⁹ und/oder O(C=O)R⁹, wobei R⁹ für einen gesättigten, geradkettigen oder verzweigten Alkylrest mit 1 bis 6 Kohlenstoffatomen steht, wobei der Alkylrest O enthalten kann.

Bei der vorliegenden Erfindung ist das Polysiloxan gemäß Formel (I) ein an die Pigmentoberfläche über wenigstens ein (Zahl: 1) Sauerstoffatom oder eine (Zahl: 1) Hydroxylgruppe gebundenes Polysiloxan. Das Polysiloxan gemäß Formel (II) bezeichnet das Polysiloxan vor der Hydrolyse, mithin die Ausgangssubstanz, die nach der Hydrolyse an die Pigmentoberfläche bindet.

Die Aufgabe wurde ferner gelöst durch Bereitstellung eines Pulverlacks enthaltend mindestens ein Bindemittel sowie erfindungsgemäße Metalleffektpigmente.

Die Aufgabe wurde ferner gelöst durch Bereitstellung eines Verfahren zur Herstellung eines Pulverlackes,
welches folgende Schritte umfasst:
(a) Mischen, vorzugsweise Extrudieren, eines Metalleffektpigmentes nach einem der Ansprüche 1 bis 8 zusammen mit Bindemittel und optional weiteren Bestandteilen eines Pulverlacks,
(b) optional Vermahlen des in Schritt (a) erhaltenen Extrudats.

Die der Erfindung zugrundeliegende Aufgabe wird ferner durch Verwendung von Metalleffektpigmenten nach einem der Ansprüche 1 bis 8 in Lacken, Druckfarben, kosmetischen Formulierungen, Kunststoffen oder in Pulverlack gelöst.

Weiterhin wird die Aufgabe der Erfindung durch die Verwendung von Metalleffektpigmenten gemäß einem der Ansprüche 1 bis 8 zur Herstellung von Pulverlacken mittels Mischverfahren, vorzugsweise durch Extrusion einer Mischung von Metalleffektpigmenten und Pulverlack-Bindemittel und anschließender Vermahlung des erhaltenen Extrudats, gelöst.

Im Rahmen dieser Erfindung werden Verfahren zur Herstellung eines Pulverlackes, die das Mischen, vorzugsweise die Extrusion, aller Komponenten des Pulverlackes, einschließlich der erfindungsgemäßen Metalleffektpigmente, sowie die optionale anschließende Vermahlung des Extrudats umfassen, "Mischverfahren" genannt.

Bei den erfindungsgemäßen Metalleffektpigmenten ist das Polysiloxan gemäß Formel (I) vorzugsweise über ein oder mehrere Sauerstoffatome mit der Metalloxidschicht, vorzugsweise kovalent, verbunden. Das Polysiloxan wird über ein (Zahl: 1) Sauerstoffatom mit der Metalloxidschicht verbunden, wenn X = O ist und R⁷ und R⁸ nicht für O stehen, sondern für Alkyl- oder Arylrest stehen. Eine Bindung des Polysiloxans gemäß Formel (I) über zwei Sauerstoffatome kann dann erfolgen, wenn neben X = O entweder R⁷ oder R⁸ auch für O stehen. Eine, vorzugsweise kovalente, Bindung des Polysiloxans gemäß Formel (I) über drei Sauerstoffatome kann dann erfolgen, wenn neben X = O auch R⁷ und R⁸ auch für O stehen. Auch wenn R⁷ und/oder R⁸ jeweils für Sauerstoffatom stehen, muß nicht notwendigerweise eine direkte Bindung über drei bzw. zwei Sauerstoffatome mit der Metalloxidschichtoberfläche erfolgen. Es ist auch möglich, das nach Hydrolyse der Ausgangsverbindung unter Kondensation der entstehenden Hydroxylgruppen und nachfolgender Wasserabspaltung auch eine sauerstoffverbrückte Bindung zu einem oder zu mehreren anderen Polysiloxanen gemäß Formel (I) ausgebildet wird. Somit kann die kovalente Bindung eines Polysiloxans gemäß Formel (I) auch indirekt an die Metalloxidoberfläche erfolgen. Die Bindung an die Pigmentoberfläche kann auch über ionische Wechselwirkungen, van-der-Waals-Kräfte und/oder Wasserstoffbrücken erfolgen.

Selbstverständlich kann die Bindung des Polysiloxans gemäß Formel (I) auch direkt an die Metalloxidoberfläche des Metalleffektpigmentes über eine (Zahl: 1), zwei oder drei Sauerstoffatome erfolgen.

Es hat sich überraschend gezeigt, dass die erfindungsgemäßen Metalleffektpigmente, die mit einem Polysiloxan gemäß Formel (I) beschichtet sind, zusammen mit Pulverlackharz, beispielsweise durch Extrusion, kompaktiert werden können, ohne dass es zu einer merklichen Beeinträchtigung der optischen Eigenschaften der Metalleffektpigmente kommt. Das erhaltene Extrudat kann dann zu einer gewünschten Partikelgröße vermahlen werden, wobei es überraschenderweise ebenfalls nicht zu einer wesentlichen Beeinträchtigung der optischen Eigenschaften der Metalleffektpigmente kommt. Mithin kann so ein Pulverlack oder ein Pulverlackkonzentrat in der Form eines Masterbatches direkt bereitgestellt werden, wobei die stark spiegelnden Eigenschaften der Metalleffektpigmente erhalten bleiben.

Die Beschichtung mit dem Polysiloxan gemäß Formel (I) bewirkt mithin einen überraschend effektiven Schutz der Metalleffektpigmente gegenüber mechanischer Belastung.

Darüber hinaus wurde überraschenderweise festgestellt, dass die erfindungsgemäßen Metalleffektpigmente, verglichen mit einer fluorhaltigen Beschichtung versehenen Metalleffektpigmenten, wesentlich verbesserte Überlackierungseigenschaften aufweisen.

Somit können die erfindungsgemäßen Metalleffektpigmente nach Aufbringung mittels Pulverlackbeschichtung und nachfolgendem Klarlackauftrag auch harschen Umgebungsbedingungen, wie Feuchtigkeit, starken Temperaturschwankungen, etc. ausgesetzt werden.

Ferner zeigten die erfindungsgemäßen Metalleffektpigmente nach Aufbringung mittels Pulverlackbeschichtung ein, verglichen mit einer fluorhaltigen Beschichtung versehenen Metalleffektpigmenten, verbessertes Verlaufs- bzw. Nivellierverhalten. Aufgrund des verbesserten Verlaufverhaltens nach einer Lackierung, vorzugsweise Pulverlackierung, wird die Lackoberfläche glatter und ebener.

Vorzugsweise ist das plättchenförmige Substrat von der Metalloxidbeschichtung im Wesentlichen umhüllt, wobei die umhüllende Metalloxidbeschichtung vorzugsweise Oxide und/oder Oxidhydrate von Silizium, Titan, Zirkon, Eisen, Aluminium, Cer, Chrom und/oder und/oder Mischungen davon enthält oder daraus besteht.

Vorzugsweise umhüllt die Metalloxidbeschichtung das plättchenförmige Substrat wenigstens zu 90 %, weiter bevorzugt zu wenigstens 95 %, noch weiter bevorzugt zu wenigstens 99 %, äußerst bevorzugt zu 100 %. Die Angabe in % bezieht sich dabei auf den Anteil der umhüllten Substratoberfläche, bezogen auf die gesamte Substratoberfläche.

Die erfindungsgemäßen Metalleffektpigmente enthalten vorzugsweise ein plättchenförmiges metallisches Substrat, welches aus der Gruppe, die aus Aluminium, Kupfer, Zink, Zinn, Messing (Goldbronze), Eisen, Titan, Chrom, Nickel, Silber, Gold, Stahl sowie deren Legierungen und/oder Gemische besteht, ausgewählt wird. Hierbei sind Aluminium, Eisen und/oder Messing bevorzugt und Aluminium und/oder Messing besonders bevorzugt.

Die erfindungsgemäßen Metalleffektpigmente haben eine plättchenartige Form, mit einem plättchenartigen Metallkern, auf dem optional eine oder mehrere separate Metalloxidschichten aufgebracht sind, wobei auf der äußersten Metalloxidschicht das Polysiloxan gemäß Formel (I) kovalent gebunden ist.

Diese mittels herkömmlicher Kugelmühlenvermahlung von Metallgrieß erzeugten Metalleffektpigmente weisen vorzugsweise einen mittleren Teilchendurchmesser von 2 bis 200 µm, bevorzugt 6 bis 100 µm und besonders bevorzugt 8 bis 75 µm auf.

Die mittlere Teilchendicke der erfindungsgemäßen Metalleffektpigmente beträgt vorzugsweise 0,02 bis 5 µm, weiter bevorzugt 0,02 bis 2,0 µm und besonders bevorzugt 0,05 bis 1,0 µm. Diese Angaben beziehen sich dabei auf den metallischen Kern und nicht auf ggf. vorhandene, weitere Beschichtungen.

Selbstverständlich können auch - optional mit einer oder mehreren separaten Metalloxidschichten versehenen - PVD-Pigmente, vorzugsweise Aluminium-PVD-Pigmente, als zu beschichtende Metalleffektpigmente verwendet werden, wobei die Größen und Dicken im vorgenannten Bereich liegen können. Die Dicke der PVD-Pigmente liegt jedoch bevorzugt in einem Bereich von 20 nm bis 100 nm, vorzugsweise von 30 bis 60 nm.

Oberhalb einer mittleren Größe von 200 µm sind die Metalleffektpigmente üblicherweise für den Pulverlack nicht mehr gut verwendbar. Unterhalb von 2 µm mittlerer Größe ist in der Regel kein befriedigender metallischer Effekt mehr erreichbar.

Das Verhältnis von mittlerem Teilchendurchmesser zur mittleren Teilchendicke (Formfaktor) ist vorzugsweise größer 5, bevorzugt größer 20, besonders bevorzugt größer 50.

Das Polysiloxan gemäß Formel (II) kann direkt an die sich auf einem Metallpigment ausbildende natürliche Metalloxidschicht gebunden werden. Die Bindung erfolgt in der Regel und auch bevorzugt unter Kondensation einer oder mehrerer OH-Gruppen des hydrolysierten Polysiloxans, bei dem die Gruppe Z und gegebenenfalls die Gruppen R⁷ und R⁸ durch Hydroxylgruppen ersetzt sind, die nachfolgend mit auf der Metalloxidschicht vorhanden OH-Gruppen oder Sauerstofffunktionen kondensieren unter gleichzeitiger Wasserabspaltung.

Vorzugsweise wird auf das Metalleffektpigment eine separate Metalloxidschicht aufgebracht, wodurch eine größere Anzahl von OH-Gruppen auf der Effektpigmentoberfläche erzeugt werden kann und mithin eine verbesserte oder verstärkte Anbindung von hydrolysiertem Polysiloxan gemäß Formel (II) ermöglichen.

Die Anbindung kann jedoch auch beispielsweise über Wasserstoffbrücken nicht kondensierter OH-Gruppen sowohl des Polysiloxans als auch oberflächlicher OH-Gruppen des Metalleffektpigments erfolgen.

Die erfindungsgemäßen Metalleffektpigmente sind mit einer die Metallplättchen, vorzugsweise im Wesentlichen umhüllenden, Metalloxidbeschichtung versehen. Gemäß einer bevorzugten Variante der Erfindung ist die mindestens eine Metalloxidschicht auf das plättchenförmige Substrat durch Beschichtung, d.h. in einem separaten Schritt, aufgebracht. Die Beschichtung mit Metalloxiden und/oder Metalloxidhydraten erfolgt vorzugsweise durch Auffällung oder durch Sol-Gel-Verfahren oder durch nasschemische Oxidation der Metalloberfläche. Das Metall des Metallplättchens und der Metalloxidschicht können gleich oder voneinander verschieden sein.

Bevorzugt werden für die Metalloxidbeschichtung Oxide, Hydroxide und/oder Oxidhydrate von Silizium, Titan, Zirkon, Eisen, Aluminium, Cer, Chrom und/oder Mischungen davon verwendet. Diese Metalloxidbeschichtungen bewirken im Fall hochbrechender und/oder farbiger Oxide, wie z.B. TiO₂, Fe₂O₃, ZrO₂, Cr₂O₃, eine Farbgebung des Metalleffektpigmentes.

Gelbliche bis bräunliche Metallpigmente werden auch erhalten durch nasschemische Oxidation von Aluminiumpigmenten (DE 195 20 312 A1).

Insbesondere im Fall von Siliziumoxiden, -hydroxiden oder -oxidhydraten sowie im Fall von Aluminiumoxiden, -hydroxiden oder -oxidhydraten werden die beschichteten Metalleffektpigmente vor korrosiven Einflüssen gut geschützt. Dies ist besonders vorteilhaft, wenn die Metalleffektpigmente als leafing-Pigmente im Fall einer Einschichtlackierung an der Oberfläche des Lackes angeordnet sind und daher korrosiven Einflüssen besonders stark ausgesetzt sind. Daher sind Beschichtungen aus oder mit den Oxiden, Hydroxiden oder Oxidhydraten von Silizium und Aluminium besonders bevorzugt und jene von Silizium sind ganz besonders bevorzugt.

Weiterhin können die Metalleffektpigmente auch anorganisch/organische Mischschichten aufweisen, wie sie in der EP 1 812 519 A2 beschrieben sind, die hiermit unter Bezugnahme aufgenommen ist.

Derartige Beschichtungen stabilisieren die duktilen Metalleffektpigmente auch vor mechanischen Einflüssen. So wird die mechanische Stabilität der Metalleffektpigmente erhöht, so dass die Pigmente durch die bei der Pulverlackherstellung durch direkte Extrusion auftretenden Scherkräfte in weitaus geringerem Maße beschädigt bzw. zerstört werden, als dies bei unbeschichteten oder bei mit organischen Schutzschichten beschichteten Metalleffektpigmenten der Fall ist. Dennoch liefern derart beschichtete Metalleffektpigmente in durch Mischverfahren hergestellten Pulverlacken keine optisch befriedigenden Ergebnisse. Die Schichtdicken der Metalloxidschichten, insbesondere der schützenden Siliziumoxid-, Aluminiumoxid- und/oder anorganisch/organischen Mischschichten, liegen im Bereich von vorzugsweise 5 bis 60 nm und bevorzugt von 10 bis 50 nm.

Gemäß einer bevorzugten Variante der Erfindung bildet das aufgebrachte Polysiloxan gemäß Formel (I) keine umhüllende Polymer-Beschichtung aus. Es hat sich überraschend gezeigt, dass bereits sehr geringe Mengen an Polysiloxan gemäß Formel (I) ausreichend sind. Das Polysiloxan gemäß Formel (I) ist dabei vorzugsweise direkt auf die Metalloxidoberfläche aufgebracht ohne Verwendung einer Haft- oder Kopplungsschicht zwischen Metalloxidoberfläche und Oberflächenmodifizierungsmittel.

Die Polysiloxan gemäß Formel (I) ist bevorzugt als separate Schicht auf der Oberfläche der Metalloxidbeschichtung ausgebildet, kann aber auch in die Metalloxidbeschichtung - zumindest teilweise - einpolymerisiert sein oder mit der Metalloxidbeschichtung eine Mischschicht bilden.

Das Polysiloxan gemäß Formel (I) enthält keine basischen Gruppen und mithin keine Aminogruppen.

Gemäß einer bevorzugten Ausführungsform stehen R², R³, R⁴ und R⁵ in dem Polysiloxan gemäß Formel (I) unabhängig voneinander für gesättigte Alkylreste wie Methyl, Ethyl, n-Propyl, Isopropyl, n-Butyl, sec-Butyl oder tert.-Butyl und/oder für einen aromatischen Rest wie Phenyl.

Vorzugsweise sind R², R³, R⁴ und R⁵ gleich.

Als sehr geeignet hat sich erwiesen, wenn R², R³, R⁴ und R⁵ jeweils Methyl sind.

Vorzugsweise ist R¹ Alkyl, Cycloalkyl oder Aryl mit 1 bis 12 C-Atomen. Als sehr geeignet haben sich als R¹ Methyl, Ethyl, sec.-Butyl, n-Propyl, Isopropyl, n-Butyl, sec-Butyl, tert.-Butyl, n-Pentyl, Neopentyl, Cyclopentyl, n-Hexyl, Cyclohexyl, n-Octyl, 2-Etylhexyl, Phenyl, Methylphenyl oder Ethylphenyl erwiesen.

Weiterhin bevorzugt ist R¹ unverzweigtes Alkyl mit 1 bis 6 Kohlenstoffatomen. Bevorzugt ist R¹ Methyl, Ethyl, n-Butyl, n-Hexyl oder Phenyl. Besonders bevorzugt ist R¹ n-Butyl oder n-Hexyl.

Gemäß einer bevorzugten Ausführungsform ist R¹ verschieden von R², R³, R⁴ und R⁵. Vorzugsweise sind R¹ sowie R², R³, R⁴ und R⁵ jeweils Alkylreste, wobei der Alkylrest R¹ vorzugsweise wenigstens ein Kohlenstoffatom, weiter bevorzugt wenigstens 2 Kohlenstoffatome, noch weiter bevorzugt wenigstens 3 Kohlenstoffatome, mehr aufweist als die Alkylreste R², R³, R⁴ und R⁵

Äußerst bevorzugt ist R¹ n-Butyl oder n-Hexyl und R², R³, R⁴ und R⁵ jeweils Methyl.

Gemäß einer weiteren bevorzugten Ausführungsform ist y =2 bis 6, und A steht für (CH₂)ₙ, wobei n = 0, und B steht für (OCH₂CH₂)_{w}, wobei w = 0 bis 6 ist.

Vorzugsweise ist y = 2 und A steht für (CH₂)ₙ, wobei n = 0, und B steht für (OCH₂CH₂)_{w}, wobei w = 0 ist.

Ferner ist bevorzugt, dass durchschnittlich 2 ≤ x ≤ 150, bevorzugt 2,5 ≤ x ≤ 100, weiter bevorzugt 3,0 ≤ x ≤ 80, noch weiter bevorzugt 3,5 ≤ x ≤ 50. Hierbei beziehen sich die Werte für x auf Durchschnittswerte, da die Polysiloxane in der Regel als Polymer-/ Oligomergemisch mit unterschiedlichen Molekulargewichten vorliegen.

Die erfindungsgemäßen Metalleffektpigmente weisen bevorzugt einen Metalloxidgehalt von 0,1 bis 50 Gew. -%, bevorzugt von 1 bis 25 Gew. -%, besonders bevorzugt von 2 bis 15 Gew.-% auf. Der Gehalt an Polysiloxan gemäß Formel (I) liegt vorzugsweise in einem Bereich von 0,1 bis 10 Gew.-%, bevorzugt von 0,5 bis 5 Gew.-%, besonders bevorzugt von 0,75 bis 3 Gew.-%, jeweils bezogen auf das Pigmentgesamtgewicht.

Bei einer weiteren vorteilhaften Ausgestaltung der Erfindung kann die Beschichtung mit Polysiloxan gemäß Formel (I) der metalloxidbeschichteten Metalleffektpigmente weitere Zusatzstoffe enthalten, beispielsweise organische und/oder anorganische Buntpigmente, Farbstoffe, Korrosionsinhibitoren und/oder UV-Stabilisatoren.

Die erfindungsgemäßen Metalleffektpigmente mit einer mit Polysiloxan gemäß Formel (I) modifizierten Metalloxidbeschichtung mit vorzugsweise geringer Schichtdicke sind kostengünstig herstellbar.

Bei dem erfindungsgemäßen Verfahren wird die Oberfläche der Metalloxidschicht mit einem Polysiloxan der Formel (II), vorzugsweise unter hydrolytischen Bedingungen, umgesetzt, wobei Z für eine hydrolysierbare Gruppe steht und R⁷ und R⁸ optional jeweils für eine hydrolysierbare Gruppe stehen können.

Das auf der Pigmentoberfläche aufgebrachte Polysiloxan gemäß Formel (I) kann auf unterschiedliche Weise aufgebracht werden. Dabei wird vorzugsweise ein Polysiloxan der Formel (II) verwendet, wobei Z für eine hydrolysierbare Gruppe steht und R⁷ und R⁸ optional jeweils für eine hydrolysierbare Gruppe stehen können.

Die hydrolysierbare Gruppe Z steht vorzugsweise für Halogen, beispielsweise für F, Cl, Br und/oder I, und/oder OR⁹ und/oder O(C=O)R⁹, wobei R⁹ für einen gesättigten, geradkettigen oder verzweigten Alkylrest mit 1 bis 6 Kohlenstoffatomen steht, wobei der Alkylrest O enthalten kann.

Äußerst bevorzugt steht OR⁹ für Alkoxyreste, insbesondere Methoxy, Ethoxy, n-Propoxy, Isopropoxy, n-Butoxy, sec-Butoxy oder Isobutoxy. Als sehr geeignet haben sich Methoxy und Ethoxy erwiesen.

Weiterhin ist bevorzugt, dass O(C=O)R⁹ für einen Fettsäurerest mit 1 bis 6 Kohlenstoffatomen, steht, insbesondere für Acetat, Propionat, Butyrat.

Die vorgenannten Alkoxyreste, Fettsäurereste oder die Halogen-Gruppe lassen sich leicht hydrolysieren, wodurch die Gruppe(n) Z sowie optional R⁷ und/oder R⁸ in Formel (II) durch Hydroxyl ersetzt werden, die sodann unter Kondensation, wie oben beschrieben, an die Metalloxidbeschichtung, vorzugsweise unter Ausbildung wenigstens einer Metall-O-Si-Bindung kovalent, binden können, wobei Metall für das oder ein Metall der Metalloxidbeschichtung steht.

Beispielsweise wird ein Polysiloxan gemäß Formel (II) in einem handelsüblichen Lösemittel gelöst, ggf. auch unter hydrolytischen Bedingungen, beispielsweise in Wasser in Gegenwart von saurerem oder basischem Katalysator, und nachfolgend auf das metalloxidbeschichtete plättchenförmige Substrat aufgebracht und aufgetrocknet. Alternativ kann die Beschichtung mit dem Polysiloxan gemäß Formel (II) unmittelbar nach der Belegung des plättchenförmigen, metallischen Substrates mit wenigstens einer Metalloxidschicht in einem Eintopfverfahren erfolgen.

Es wurde überraschenderweise festgestellt, dass das Polysiloxan gemäß Formel (I) äußerst zuverlässig auf der Oberfläche der Metalloxidbeschichtung der erfindungsgemäßen Metalleffektpigmente haftet und auch gegenüber den bei der Pulverlackherstellung durch direkte Extrusion auf die Pigmente einwirkenden mechanischen Scherkräften stabil ist. Zu einer mechanischen Zerkleinerung der Pigmente kommt es frühestens im Mahlprozess, jedoch sind die dabei gegebenenfalls entstehenden Fragmente nach wie vor mit Metalloxidschicht und Polysiloxan gemäß Formel (I) belegt und tragen somit zum hochwertigen optischen Erscheinungsbild bei. Die erfindungsgemäßen Metalleffektpigmente und die mit diesen erfindungsgemäßen Metalleffektpigmente pigmentierten Pulverlackanwendungen weisen gegenüber den mit handelsüblichen Metalleffektpigmenten pigmentierten Pulverlackanwendungen auch bessere funktionale Eigenschaften hinsichtlich Überlackierbarkeit, Abriebbeständigkeit, Helligkeit und metallischen Glanz auf.

Die erfindungsgemäßen Metalleffektpigmente finden bevorzugt in Pulverlacken mit einem Pigmentgehalt von 0,1 bis 20 Gew. -%, vorzugsweise von 0,2 bis 10 Gew. -%, besonders bevorzugt von 0,5 bis 6 Gew. -%, bezogen auf das Pulverlackgesamtgewicht, Verwendung.

Der Erfindungsgegenstand betrifft auch die Verwendung der erfindungsgemäßen Metalleffektpigmente in Lacken, Druckfarben, kosmetischen Formulierungen, Kunststoffen und Pulverlacken, insbesondere in durch direkte Extrusion hergestellten Pulverlacken.

Als Pulverlackkomponente sind besonders bevorzugt Polyester-Pulverlacke, Polyacrylat-Pulverlacke, Polyurethan-Pulverlacke, Epoxid-Pulverlacke oder Polyester-Epoxid-Pulverlacke.

Weiterhin finden die erfindungsgemäßen Pulverlacke, die die erfindungsgemäßen Metalleffektpigmente enthalten, Verwendung zur Lackierung von Substraten, welche Metall, Metallfolien, Kunststoff, Glas, Glasfaser, Verbundwerkstoffe, Keramik, Holz, Beton, Textilmaterial und Holzwerkstoffe, wie beispielsweise MDF-Platten oder andere zu dekorativen und/oder schützenden Zwecken geeignete Werkstoffe, enthalten.

Die Erfindung betrifft ferner auch ein lackiertes Substrat, das mit dem erfindungsgemäßen Pulverlack oder den erfindungsgemäßen Metalleffektpigmenten lackiert ist.

Die erfindungsgemäße Pulverlackapplikation kann mit einem einschichtigen oder mehrschichtigen Klarlack beschichtet werden.

Ein mit erfindungsgemäßen Metalleffektpigmenten pigmentierter, durch direkte Extrusion kostengünstig herstellbarer Pulverlack ermöglicht abriebstabile, ein- und mehrschichtige Pulverlackapplikationen mit einer ausgezeichneten metallischen Optik, insbesondere hinsichtlich Glanz, Brillanz und Helligkeit, welche mit handelsüblichen Metalleffektpigmenten pigmentierten Pulverlackapplikationen bisher nicht realisiert werden konnten. Zudem weist ein derartiger erfindungsgemäßer Pulverlack eine bisher bei mit Metalleffektpigmenten pigmentierten Pulverlacken unerreichte Applizierstabilität auf, d. h. es erfolgt während des Applizierens keine die Oberflächenoptik der Pulverlackbeschichtung negativ beeinträchtigende Entmischung der Pulverlackbestandteile.

Äußerst vorteilhaft enthalten die erfindungsgemäßen Metalleffektpigmente keine fluorhaltigen Verbindungen. Mithin kann bei der vorliegenden Erfindung auf die Verwendung von fluorhaltigen Verbindungen, wie fluorhaltigem Beschichtungsmittel, verzichtet werden. Da die Polysiloxane gemäß Formel (II) als Ausgangssubstanz sehr viel preisgünstiger bereitgestellt werden können, ermöglicht die vorliegende Erfindung die Bereitstellung preisgünstiger und qualitativ hochwertiger Pulverlacke.

Ein weiterer Gegenstand der Erfindung ist ein Verfahren zur Herstellung eines Pulverlackes, welches folgende Schritte umfasst:
(a) Mischen, vorzugsweise Extrudieren, eines Metalleffektpigmentes nach einem der Ansprüche 1 bis 8 zusammen mit Bindemittel und optional weiteren Bestandteilen eines Pulverlacks,
(b) optional Vermahlen des in Schritt (a) erhaltenen Extrudats.

Die zur Pulverlackherstellung mittels Mischverfahren eingesetzten Rohstoffe werden einschließlich der erfindungsgemäßen Metalleffektpigmente, ggf. nach einer separaten Vormischung, in einem Extruder in der Schmelze zu einem homogenen Extrudat auf bekannte Weise verarbeitet. Das aus dem Extruder entnommene, gekühlte und zerkleinerte Extrudat wird üblicherweise auf herkömmliche Weise vermahlen. Eine derartige Pulverlackherstellung ist beispielsweise in J. Pietschmann, Industrielle Pulverbeschichtung, 1. Aufl., Okt. 2002 ausführlich beschrieben.

Die besonders kostengünstig durch Mischverfahren herstellbaren und mit den erfindungsgemäßen Metalleffektpigmenten pigmentierten Pulverlacke können zudem weitere Komponenten wie Füllstoffe, Additive, Vernetzer, Pigmente und ggf. weitere Zusatzstoffe enthalten.

Die mit den erfindungsgemäßen Metalleffektpigmenten pigmentierten Pulverlacke sind besonders vorteilhaft in lösungsmittelfreien Anwendungen in Form von umweltfreundlichen Grundierungen oder Einschichtdecklacken in vielen Bereichen der metallverarbeitenden Industrie, insbesondere der Automobil- und Automobilzuliefererindustrie, mit einem nahezu vollständigen Nutzungsgrad einsetzbar.

Insbesondere ermöglicht der erfindungsgemäße Pulverlack eine Rückführung und Wiederverwendung des Oversprays, ohne dass es bei der Wiederverwendung des Oversprays als Pulverlack zu einer Beeinträchtigung der Optik des lackierten Gegenstandes kommt. Somit ermöglichen die erfindungsgemäßen Metalleffektpigmente bzw. der erfindungsgemäße Pulverlack eine bislang nicht erreichte Ausbeute bei der Pulverlackierung.

Das Polysiloxan gemäß Formel (II) kann durch folgendes allgemeines Reaktionsschema erhalten werden:
(1) Umsetzung von Alkyllithium R¹Li (X) mit (trimerisiertem) Dialkylsilanol R²R³Si(OH)₂ (III) unter Erhalt des Lithiumsilanolats (IV): 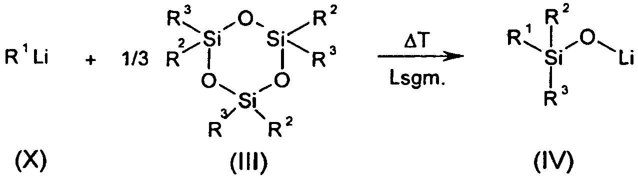
(2) Umsetzung des Lithiumsilanolats (IV) mit (trimerisiertem) Dialkylsilanol R²R³Si(OH)₂ (III) unter Erhalt von makromerem Silanolat (V): 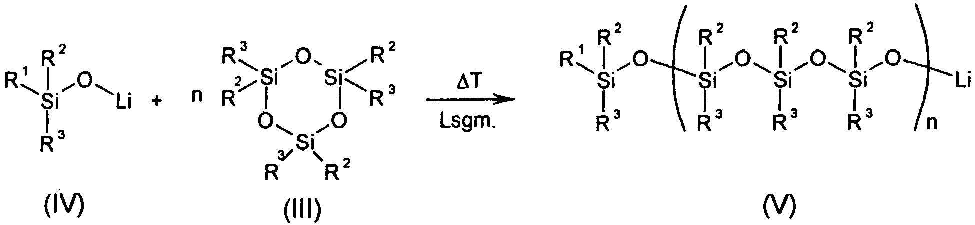
(3) Umsetzung des makromeren Silanolats (V) mit Dialkylchlorsilan (VI) (Terminierungsreaktion) unter Erhalt von Polysiloxan (VIIa) mit endständigem Wasserstoff: 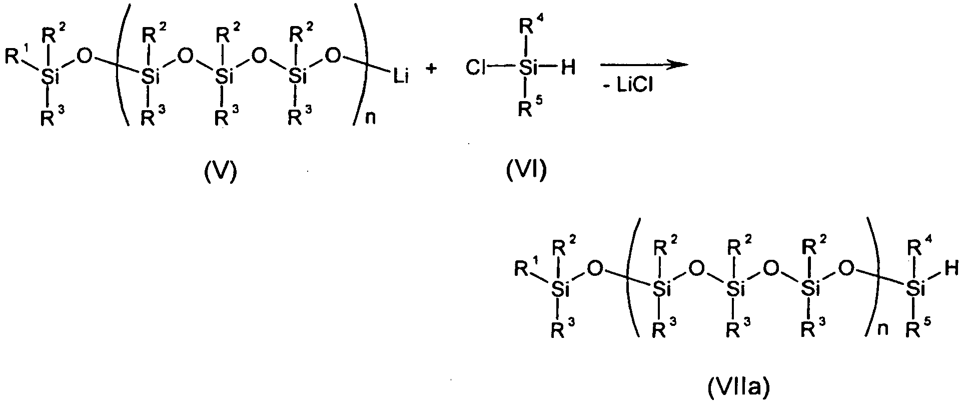
(4) Hydrosilylierung des Polysiloxans (Vlla) bzw. in geänderter Darstellung (Vllb), in der x=n/3 ist, mit einem Alkoxyalkylsilan (Z=OR⁹) oder Alkylhalogensilan (Z=Halogen, vorzugsweise Cl) (VIII), wobei die Verbindung (VIII) eine endständige ethylenische Doppelbindung aufweist, unter Erhalt des Polysiloxans (I):

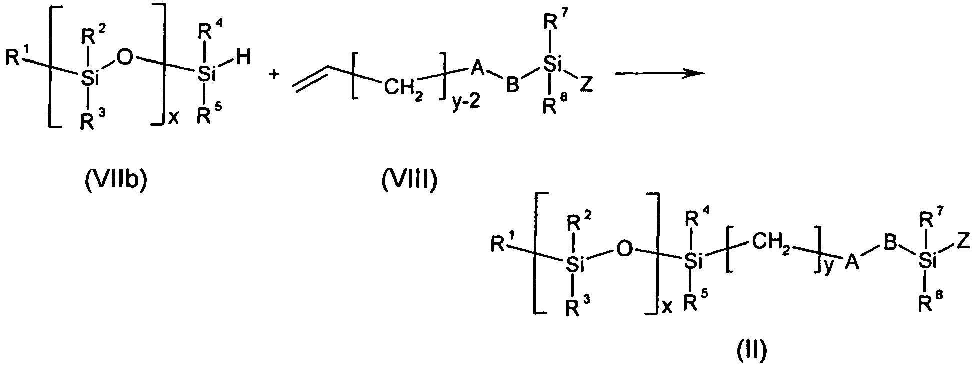

Als Alkyllithium können im Schritt (1) Alkyllithium oder Aryllithium R¹Li verwendet werden, wobei R¹ die in Anspruch 1 angegebene Bedeutung hat. Beispielsweise können beispielsweise Methyllithium, Ethyllithium, sec.-Butyllithium, n-Propyllithium, Isopropyllithium, n-Butyllithium, sec-Butyllithium, tert.-Butyllithium, n-Pentyllithium, Neopentyllithium, Cyclopentyllithium, n-Hexyllithium, Cyclohexyllithium, n-Octyllithium, 2-Ethyllithium, n-Phenyllithium, Methylphenyllithium oder Ethylphenyllithium, etc. verwendet werden.

Als Dialkylsilanol können im Schritt (1) und Schritt (2) beispielsweise symmetrisch oder asymmetrisch substituierte Dialkylsilanole R²R³Si(OH)₂ verwendet werden, wobei R² und R³ die in Anspruch 1 angegebene Bedeutung haben. Beispielsweise können als symmetrisch substituierte Dialkylsilanole Dimethylsilanol, Diethylsilanol, Di-n-propylsilanol, Di-isopropylsilanol, Di-n-butylsilanol, Di-sec-butylsilanol, Di-tert.-butylsilanol, etc. verwendet werden. Als asymmetrisch substituierte Dialkylsilanole können beispielsweise Ethylmethylsilanol, Methyl-n-propylsilanol, n-Butylmethylsilanol, Isobutylmethylsilanol, tert.-Butylmethylsilanol, Ethyl-n-propyllsilanol, n-Butyl-n-propylsilanol, n-Butylethylsilanol, Isobutyl-n-propylsilanol, tert.-Butyl-n-propylsilanol, etc. verwendet werden

Vorzugsweise werden symmetrisch substituierte Dialkylsilanole verwendet.

Im Schritt (3) kann symmetrisch oder asymmetrisch substituiertes Dialkylhalogensilan, vorzugsweise Dialkylchlorsilan HSiR⁴R⁵Cl, wobei R⁴ und R⁵ die in Anspruch 1 angegebene Bedeutung haben, verwendet werden. Als symmetrisch substituiertes Dialkylchlorsilan kann beispielsweise Dimethylchlorsilan, Diethylchlorsilan, Di-n-Propylchlorsilan, Di-isopropylchlorsilan, Di-n-butylchlorsilan, Di-sec-butylchlorsilan, Di-tert.-butylchlorsilan, Di-n-pentylchlorsilan, Dineopentylchlorsilan, Di-cyclopentylchlorsilan, Di-n-hexylchlorsilan, Dicyclohexylchlorsilan, Di-n-octylchlorsilan, etc. verwendet werden.

Als asymmetrisch substituiertes Dialkylchlorsilan kann beispielsweise Ethylmethylchlorsilan, Methyl-n-propylchlorsilan, n-Butyl-methylchlorsilan, sec-Butylmethylchlorsilan, tert.-Butyl-methylchlorsilan, n-Butyl-ethylchlorsilan, sec-Butyl-ethylchlorsilan, tert.-Butyl-ethylchlorsilan, etc. verwendet werden.

Als Silan kann in Schritt (4) die Verbindung (CH₂=CH)-(CH₂)_{y-2}-A-B-SiR⁷R⁸Z verwendet werden, wobei Z für eine hydrolysierbare Gruppe steht und R⁷ und R⁸ unabhängig voneinander für einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen und/oder für Halogen, vorzugsweise Cl, OR⁹ und/oder O(C=O)R⁹, wobei R⁹ für einen gesättigten, geradkettigen oder verzweigten Alkylrest mit 1 bis 6 Kohlenstoffatomen steht, wobei der Alkylrest O enthalten kann, stehen können. A und B sowie x und y haben dabei jeweils die Bedeutung, wie in Anspruch 1 angegeben.

Die in Schritt (4) vorzugsweise als Alkoxyalkylsilan oder Alkylchlorsilan verwendeten Verbindungen weisen eine endständige ethylenische Gruppe auf, beispielsweise eine endständige Alkenylgruppe wie eine Vinylgruppe oder Allylgruppe oder einen 5-Hexenylrest, 7-Octenylrest oder eine 10-Undecenylrest. Beispielsweise können als Alkoxyalkylsilan oder Alkylchlorsilan Vinyltrichlorsilan, Vinyltri-tert.-butoxysilan, Vinyltriacetoxysilan, Vinylphenylmethylmethoxysilan, Vinylphenylmethylchlorsilan, Vinylphenyldiethoxysilan, Vinyldiphenylchlorsilan, Vinyldimethylethoxysilan, Vinyldimethylchlorsilan, 1-Vinyl-3-(chlormethyl)-1,1,3,3-tetramethyldisiloxan, Vinyl(chlormethyl)dimethylsilan, Vinyldimethylethoxysilan, Vinyltris(methoxypropoxy)silan, Vinyltris(2-methoxyethoxy)silan, Vinyltrimethoxysilan, Vinyltriisopropoxysilan, Vinyltriethoxysilan, Vinylphenyldichlorsilan, Vinyloctyldichlorsilan, Vinylmethyldimethoxysilan, Vinylmethyldiethoxysilan, Vinylmethyldichlorsilan, Vinylmethyldiacetoxysilan, Vinyldiphenylethoxysilan, 5-Hexenyltrichlorsilan, 5-Hexenyldimethylchlorsilan, Docosenyltriethoxysilan, Butenyltriethoxysilan, Butenylmethyldichlorsilan, Allyltrimethoxysilan, Allyltriethoxysilan, Allyltrichlorsilan, Allyloxyundecyltrimethoxysilan, Allylmethyldichlorsilan, Allyldimethylchlorsilan, Allyl(chlormethyl)dimethylsilan, Hexenyltriethoxysilan, Vinyldiphenylethoxysilan, 10-Undecenyltrimethoxysilan, 10-Undecenyltrichlorsilan, 10-undecenyldimethylchlorsilan, Styrylethyltrimethoxysilan, 7-Octenyltrimethoxysilan, 7-Octenyltrimethoxysilan, 7-Octenyldimethylchlorsilan, etc. verwendet werden.

Die Hydrosilylierungsreaktion in Schritt (4) wird auf übliche Art und Weise, vorzugsweise in Gegenwart eines Katalysators, beispielsweise Hexachloroplatin-IVsäure bei erhöhter Temperatur, beispielsweise in einem Bereich von 20 bis 200°C, vorzugsweise von 70 bis 150°C, durchgeführt.

Eine bevorzugte Ausführungsform des zu verwendenden Polysiloxans bei der Herstellung des erfindungsgemäßen Metalleffektpigmentes ist in Formel (IX) dargestellt, 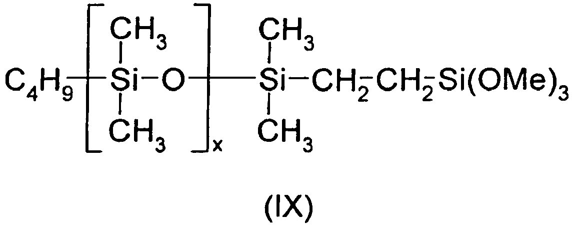 wobei es sich bei dem Substituenten C₄H₉ vorzugsweise um n-Butyl handelt. Vorzugsweise enthält das Polysiloxan durchschnittlich 2 bis 200, weiter bevorzugt von 2,5 bis 150, noch weiter bevorzugt von 3 bis 100, noch weiter bevorzugt von 3,5 bis 50, Dimethylsiloxy-Einheiten. Nach Hydrolyse der drei Methoxygruppen zu drei OH-Gruppen wird die so hydrolysierte Verbindung (IX) über die Sauerstoffatome an die Metalloxide der Metalleffektpigmente, vorzugsweise kovalent, gebunden.

Bei einer bevorzugten Ausführungsform liegen die erfindungsgemäßen Metalleffektigmente in Form eines Granulats vor. Hierbei enthält das Granulat mindestens ein Bindemittel und optional Additive oder Wachse.

In der Granulatform lässt sich das Metalleffektpigment leichter in die Anwendung formulieren. Die Staubbelastung, die beim Hantieren mit einem Metalleffektpigmentpulver zwangsweise auftritt, lässt sich vermeiden.

Das Granulat kann auch in üblicher Weise in eine feste Form zu Pellets, Tabletten, Würstchen, Briketts oder Kugeln verformt werden.

Die dem Granulat zugegebenen Bindemittel werden hinsichtlich auf die vorgesehene Anwendung hin ausgesucht. Besonders bevorzugt werden die Pigmentgranulate für Pulverlacke verwendet. Die Bindemittel entsprechen in diesem Fall bevorzugt jenen, die auch für Pulverlacke verwendet werden.

Der Gehalt des erfindungsgemäßen Metalleffektpigments an dem Granulat beträgt vorzugsweise 50 bis 95 Gew.-% und besonders bevorzugt 70 bis 90 Gew.-%, jeweils bezogen auf das gesamte Granulat.

Der Anteil an Bindemittel beträgt vorzugsweise 5 bis 30 Gew.-% und besonders bevorzugt 10 bis 20 Gew.-%, jeweils bezogen auf das gesamte Granulat.

Anhand der nachstehend aufgeführten Beispiele wird die Erfindung näher erläutert:

### Beispiel 1a:

### 1. Stufe: Herstellung eines alpha-n-Butyl-omega-H-polydimethylsiloxans mit einem Molekulargewicht von ca. 1960 g/mol

1 mol n-Butyllithium wurde zu 8,3 mol Hexamethylcyclotrisiloxan in 1899 ml Cyclohexan (wasserfrei) unter Stickstoffatmosphäre in einem Dreihalskolben mit KPG-Rührer unter Rühren bei 28 bis 30°C über 30 Minuten zugetropft. Danach wurden über 15 Minuten 1664 ml THF mit einer Temperatur von 25°C zugetropft. Der Ansatz wurde leicht gekühlt, um die Temperatur bei 30°C zu halten. Die Temperatur wurde bei 30°C gehalten, bis das Hexamethylcyclotrisiloxan nahezu vollständig umgesetzt war. Der Umsetzungsgrad wurde über NMR bestimmt, bis der Anteil an Hexamethylcyclotrisiloxan ≤ 1 Gew.-% war. Die Umsetzung wurde sodann durch Zugabe von 1,16 mol Dimethylchlorsilan für 0,5 h bei 25°C terminiert, wobei die Reaktionstemperatur unter Kühlung bei maximal 30°C gehalten wurde. Während der Zugabe fiel Lithiumchlorid als weißer Festkörper aus. Das Reaktionsprodukt (makromeres alpha-n-Butyl-omega-H- polydimethylsiloxan) wurde durch Zugabe von 150 ml einer 10%igen wässrigen Natriumbicarbonatlösung neutralisiert. Nachfolgend wurde die wässrige Phase durch Phasentrennung und die Lösemittel mittels Vakuumdestillation bei 130°C und 50 mbar entfernt. Anschließend wurde das Produkt über einen Druckfilter filtriert.

### 2.Stufe: : Herstellung des alpha-n-Butyl-omega-trimethoxysilyl-ethylpolydimethylsiloxans

Zu 0,5 Mol des neutralisierten Reaktionsproduktes (makromeres alpha-n-Butyl-omega-H-polydimethylsiloxan) wurden zunächst 0,7 g einer 6%igen Hexachloroplatin(IV)säurehydrat-Lösung in Isopropanol zugegeben und sodann 0,6 Mol Vinyltrimethoxysilan über 0,5 h bei einer Reaktionstemperatur von 80 bis maximal 120°C zugegeben. Die Umsetzung wurde mittels gasvolumetrischer Si-H Bestimmung verfolgt. Nach vollständiger Umsetzung wurde das überschüssige Vinyltrimethoxysilan im Reaktionsprodukt mittels Vakuumdestillation bei 130°C und 50 mbar entfernt.

### Beispiel 1b:

### 1. Stufe: Herstellung eines alpha-n-Hexyl-omega-H-polydimethylsiloxans mit einem Molekulargewicht von ca. 600 g/mol.

1 mol n-Hexyllithium wurde zu 2,5 mol Hexamethylcyclotrisiloxan in 680 ml Cyclohexan (wasserfrei) unter Stickstoffatmosphäre in einem Dreihalskolben mit KPG-Rührer unter Rühren bei 28 bis 30°C über 30 Minuten zugetropft. Danach wurden über 15 Minuten 595 ml THF mit einer Temperatur von 25°C zugetropft. Der Ansatz wurde leicht gekühlt, um die Temperatur bei 30°C zu halten. Die Temperatur wurde bei 30°C gehalten, bis das Hexamethylcyclotrisiloxan nahezu vollständig umgesetzt war. Der Umsetzungsgrad wurde über NMR bestimmt, bis der Anteil an Hexamethylcyclotrisiloxan ≤ 1 Gew.-% war. Die Umsetzung wurde sodann durch Zugabe von 1,16 mol Dimethylchlorsilan für 0,5 h bei 25°C terminiert, wobei die Reaktionstemperatur unter Kühlung bei maximal 30°C gehalten wurde. Während der Zugabe fiel Lithiumchlorid als weißer Festkörper aus. Das Reaktionsprodukt (makromeres alpha-n-Hexyl-omega-H-polydimethylsiloxan) wurde durch Zugabe von 150 ml einer 10%igen wässrigen Natriumbicarbonatlösung neutralisiert. Nachfolgend wurde die wässrige Phase durch Phasentrennung und die Lösemittel mittels Vakuumdestillation bei 130°C und 50 mbar entfernt. Anschließend wurde das Produkt über einen Druckfilter filtriert.

### 2. Stufe: Herstellung des alpha-n-Hexyl-omega-trimethoxysilyl-ethylpolydimethylsiloxans

Zu 0,5 Mol des neutralisierten Reaktionsproduktes (makromeres alpha-n-Hexyl-omega-H-polydimethylsiloxan) wurden zunächst 0,7g einer 6%igen Hexachloropiatin(IV)säurehydrat-Lösung in Isopropanol zugegeben und sodann 0,6 Mol Vinyltrimethoxysilan über 0,5h bei einer Reaktionstemperatur von 80 bis maximal 120°C zugegeben. Die Umsetzung wurde mittels gasvolumetrischer Si-H Bestimmung verfolgt. Nach vollständiger Umsetzung wurde das überschüssige Vinyltrimethoxysilan im Reaktionsprodukt mittels Vakuumdestillation bei 130°C und 50 mbar entfernt.

### Beispiel 1c:

### 1. Stufe: Herstellung eines alpha-n-Butyl-omega-H-polydimethylsiloxans mit einem Molekulargewicht von ca. 1100 g/mol.

1 mol n-Butyllithium wurde zu 4,8 mol Hexamethylcyclotrisiloxan in 1165 ml Cyclohexan (wasserfrei) unter Stickstoffatmosphäre in einem Dreihalskolben mit KPG-Rührer unter Rühren bei 28 bis 30°C über 30 Minuten zugetropft. Danach wurden über 15 Minuten 1020 ml THF mit einer Temperatur von 25°C zugetropft. Der Ansatz wurde leicht gekühlt, um die Temperatur bei 30°C zu halten. Die Temperatur wurde bei 30°C gehalten, bis das Hexamethylcyclotrisiloxan nahezu vollständig umgesetzt war. Der Umsetzungsgrad wurde über NMR bestimmt, bis der Anteil an Hexamethylcyclotrisiloxan ≤ 1 Gew.-% war. Die Umsetzung wurde sodann durch Zugabe von 1,16 mol Dimethylchlorsilan für 0,5 h bei 25°C terminiert, wobei die Reaktionstemperatur unter Kühlung bei maximal 30°C gehalten wurde. Während der Zugabe fiel Lithiumchlorid als weißer Festkörper aus. Das Reaktionsprodukt (makromeres alpha-n-Butyl-omega-H-polydimethylsiloxan) wurde durch Zugabe von 150 ml einer 10%igen wässrigen Natriumbicarbonatlösung neutralisiert. Nachfolgend wurde die wässrige Phase durch Phasentrennung und die Lösemittel mittels Vakuumdestillation bei 130°C und 50 mbar entfernt. Anschließend wurde das Produkt über einen Druckfilter filtriert.

### 2. Stufe: Herstellung des alpha-n-Butyl-omega-trimethoxysilyl-ethylpolydimethylsiloxans

Zu 0,5 Mol des neutralisierten Reaktionsproduktes (makromeres alpha-n-Butyl-omega-H-polydimethylsiloxan) wurden zunächst 0,5 g einer 6%igen Hexachloroplatin(IV)säure Hydrat Lösung in Isopropanol zugegeben und sodann 0,6 Mol Vinyltrimethoxysilan über 0,5 h bei einer Reaktionstemperatur von 80 bis maximal 120°C zugegeben. Die Umsetzung wurde mittels gasvolumetrischer Si-H Bestimmung verfolgt. Nach vollständiger Umsetzung wurde das überschüssige Vinyltrimethoxysilan im Reaktionsprodukt mittels Vakuumdestillation bei 130°C und 50 mbar entfernt.

### Beispiel 2:

Zur Herstellung eines erfindungsgemäßen, mit Polysiloxan oberflächenmodifizierten Goldbronzepigmentes werden 100 g eines silikatbeschichteten Goldbronzepigments (Dorolan 17/0 Reichgold der Fa. ECKART) in 200 ml Ethylacetat dispergiert und zur Oberflächenmodifizierung mit 2 g des Additivs (alpha-n-Butyl-omega-trimethoxysilylethyl-polydimethylsiloxans mit einem Molekulargewicht von ca. 1960 g/mol, Beispiel 1 a) versetzt und 2 h bei 40°C gerührt, anschließend wurde das Lösungsmittel im Vakuum entfernt. Das erfindungsgemäße Pulverlackpigment unterscheidet sich nicht hinsichtlich Optik und Teilchengröße von dem als Ausgangsmaterial eingesetzten Goldbronzepigment.

Zur Herstellung des Pigmentgranulats wurde das mit Polysiloxan oberflächenmodifizierte Pigment anschließend mit 17 g Lupraphen 8101 (Bindemittel auf Polyester-Polyol-Basis; Fa. BASF AG) und 7 g Licowax PE 520 (Wachs; Fa.Clariant) homogenisiert und die so entstandene Präparation zu Granulaten von einer Länge von ca. 2 - 10 mm und einem Durchmesser von ca. 2 - 3 mm verarbeitet.

Auch bei allen nachfolgenden Pigmenten der erfindungsgemäßen Beispiele und der Vergleichsbeispiele wurde das Pigment anschließend zu einem Granulat weiterverarbeitet. Dabei wurde stets ein Metalleffektpigmentgehalt von 80 Gew.-%, 15 Gew.-% Lupraphen 8101 und 5 Gew.-% Licowax PE 520 eingestellt, wobei diese Angaben sich auf das gesamte Granulat beziehen.

### Vergleichsbeispiel 3:

Die Herstellung eines herkömmlichen, metalloxidbeschichteten und mit Alkylsilan oberflächenmodifizierten Goldbronzepigmentes erfolgt gemäß Beispiel 2. Zur Oberflächenmodifizierung des Pigments wurde lediglich anstelle des Polysiloxans das Handelsprodukt Dynasylan 9116 (Hexadecyltrimethoxysilan) (Fa. Degussa) verwendet.

### Vergleichsbeispiel 4:

Dorolan 17/0 Bleichgold: Silikat beschichtetes Goldbronzeeffektpigment ohne Silannachbehandlung. Kommerziell erhältlich bei Fa. Eckart GmbH, Deutschland.

### Beispiel 5:

Zur Herstellung eines weiteren erfindungsgemäßen, mit SiO₂-beschichteten und mit Polysiloxan oberflächenmodifizierten Aluminiumpigmentes wurden in einem mit Rückflusskühler und Rührapparatur versehenen 1-Liter-Rundkolben 154 g einer handelsüblichen Aluminiumpigment-Paste (STAPA Metallic R 507 der Fa. ECKART) in 350 ml Isopropanol und 18 g Tetraethoxysilan sowie 32 g Wasser dispergiert. Die vorliegende Mischung wurde auf 80°C erwärmt und mit 5 g Triethanolamin versetzt. Nach 4 h wurden 2 g des Additivs gemäß Beispiel 1a zur Oberflächenmodifizierung zugegeben. Der Reaktionsansatz wurde langsam abgekühlt und das Pigment mittels Filtration abgetrennt, mit Isopropanol nachgewaschen und im Vakuumtrockenschrank bei 100 C ausgetrocknet.

### Beispiel 6:

Zur Herstellung eines weiteren erfindungsgemäßen, mit SiO₂-beschichteten und mit Polysiloxan oberflächenmodifizierten Aluminiumpigmentes wurde gemäß Beispiel 5 verfahren. Es wurde lediglich anstelle der handelsüblichen Aluminiumpigment-Paste (STAPA Metallic R 507 der Fa. ECKART) ein handelsübliches, unbeschichtetes Aluminiumpigment (Stapa 20 nl der Fa. ECKART) mit einer mittleren Partikelgröße von ca. 10 µm verwendet.

### Beispiel 7:

Zur Herstellung eines weiteren erfindungsgemäßen, mit SiO₂-beschichteten und mit Polysiloxan oberflächenmodifizierten Aluminiumpigmentes wurde gemäß Beispiel 5 verfahren. Es wurde lediglich anstelle der handelsüblichen Aluminiumpigment-Paste (STAPA Metallic R 507 der Fa. ECKART) ein handelsübliches, unbeschichtetes Aluminiumpigment (STAPA Metallux R 272 der Fa. ECKART) mit einer mittleren Partikelgröße von ca. 50 µm verwendet.

### Beispiel 8:

Zur Herstellung eines weiteren erfindungsgemäßen, mit SiO₂-beschichteten und mit Polysiloxan oberflächenmodifizierten Aluminiumpigmentes wurde gemäß Beispiel 5 verfahren. Es wurde lediglich anstelle der handelsüblichen Aluminiumpigment-Paste (STAPA Metallic R 507 der Fa. ECKART) ein handelsübliches, unbeschichtetes Aluminiumpigment (STAPA Metallux R 274 der Fa. ECKART) mit einer mittleren Partikelgröße von ca. 35 µm verwendet.

### Beispiel 9:

Die Herstellung eines weiteren erfindungsgemäßen Aluminiumpigmentes mit einer Polysiloxan Oberflächenmodifizierung wurden 100 g eines handelsüblichen, silikatbeschichteten Aluminiumpigmentes (PCS 2000 der Fa. Eckart, mittlere Partikelgröße ca. 20 µm) in 200 ml Isopropanol dispergiert und zur Oberflächenmodifizierung mit 2 g des Additivs (alpha-n-Butyl-omega-trimethoxysilylethyl-polydimethylsiloxans mit einem Molekulargewicht von ca. 1960 g/mol, Beispiel 1 a) versetzt und 2 h bei 40°C gerührt, anschließend wurde das Lösungsmittel im Vakuum entfernt. Das erfindungsgemäße Pulverlackpigment unterscheidet sich nicht hinsichtlich Optik und Teilchengröße von dem als Ausgangsmaterial eingesetzten Aluminiumspigment.

### Beispiel 10:

Zur Herstellung eines weiteren erfindungsgemäßen, mit SiO₂-beschichteten und mit Polysiloxan oberflächenmodifizierten Aluminiumpigmentes wird gemäß Beispiel 9 verfahren. Es wird lediglich anstelle des alpha-n-Butyl-omega-trimethoxysilyl-ethylpolydimethylsiloxans mit einem Molekulargewicht von ca. 1960 g/mol (Beispiel 1a) ein alpha-n-Hexyl-omega-trimethoxysilyl-ethyl-polydimethylsiloxan mit einem Molekulargewicht von ca. 600 g/mol (Beispiel 1b) verwendet.

### Beispiel 11:

Zur Herstellung eines weiteren erfindungsgemäßen, mit SiO₂-beschichteten und mit Polysiloxan oberflächenmodifizierten Aluminiumpigmentes wird gemäß Beispiel 9 verfahren. Es wird lediglich anstelle des alpha-n-Butyl-omega-H-polydimethylsiloxans mit einem Molekulargewicht von ca. 1960 g/mol (Beispiel 1a) mit einem alpha-n-Butyl-omega-H-polydimethylsiloxans mit einem Molekulargewicht von ca. 1.100 g/mol (Beispiel 1 c) verwendet.

### Vergleichsbeispiel 12:

Die Herstellung eines herkömmlichen Aluminiumpigmentes mit SiO₂-Beschichtung erfolgte gemäß Beispiel 5. Es wurde lediglich anstelle des zur Oberflächenmodifizierung eingesetzten Polysiloxans das Handelsprodukt Dynasylan 9116 (Fa. Degussa) (ein Alkylsilan) verwendet.

### Vergleichsbeispiel 13:

Ein weiteres herkömmliches Aluminiumpigment ohne SiO₂-Beschichtung wurde mit Polysiloxan gemäß Beispiel 1 a beschichtet. Hierzu wurden 154 g handelsübliche, Aluminiumpigmentpaste (Stapa Metallic R507 der Fa. Eckart; mittlere Partikelgröße ca. 20 µm) in 350 ml Isopropanol suspendiert, auf 80 °C aufgeheizt und unter Rühren 2 g des Additivs unter Beispiel 1a zugegeben. Nach 4h wurde der Reaktionsansatz langsam abgekühlt und das Pigment mittels Filtration abgetrennt, mit Isopropanol nachgewaschen und im Vakuumtrockenschrank bei 100 C ausgetrocknet.

### Vergleichsbeispiel 14:

PCS 2000: Silikat beschichtetes Aluminium-Effektpigment ohne weitere Oberflächennachbehandlung mit einer mittleren Partikelgröße von 20 µm. Kommerziell erhältlich bei Fa. Eckart GmbH, Deutschland.

### Vergleichsbeispiel 15:

PCS 5000: Silikat beschichtetes Aluminium-Effektpigment ohne weitere Oberflächennachbehandlung mit einer mittleren Partikelgröße von ca. 50 µm. Kommerziell erhältlich bei Fa. Eckart GmbH, Deutschland.

### Beispiel 16 und Vergleichsbeispiele 17-18:

Zur Herstellung eines goldbronze-farbigen Pulverlackes wurden jeweils 100 g eines Goldbronzepräparats bzw. -pigments gemäß nachstehender Tabelle 1 mit 900 g eines handelsüblichen Pulverklarlackes (AL96 von DuPont) gemischt und in einem Schneckenextruders bei 120°C extrudiert. Das Extrudat wurde in Stücke gebrochen und mittels einer Prallfutter-Mühle zu einem Pulverlack verarbeitet. Die Applikation des Pulverlackes erfolgte auf Q-Panels (Einbrenn-Temperatur: 200 °C, Einbrenndauer: 10 min). Die farbmetrische Vermessung erfolgte mit einem Farbmessgerät CM-508i der Fa. Minolta.

Die Abriebbeständigkeit wurde mit einem Gerät der Fa. Braive Instruments, Typ Washability durchgeführt. Dazu wurde der Metallschlitten, welcher über die zu prüfende Lackoberfläche mit der Geschwindigkeitseinstellung Stufe 1 fährt, mit einer Gummischicht modifiziert. Als Reibpartner wurde schwarzes Papier verwendet, das unterhalb des modifizierten Metallschlittens gelegt wurde. Als Qualitätsmerkmal wurde der Helligkeitsunterschied (ΔL*) zwischen Ausgangzustand und dem Zustand nach 20 Doppel-Hüben sowohl auf dem schwarzen Papier sowie auf dem Blech gemessen.

**Tabelle 1:**

| **Beispiel** | **Pigment** | **Optik** (subjektiver Eindruck) | **L*** | **ΔL* Blech*** | **ΔL* Papier** | **AbriebBeständigkeit** |
|---|---|---|---|---|---|---|
| Beispiel 16 | Pigment gemäß Beispiel 2 | brillant, metallisch | 59,1 | 0,14 | 1,2 | hoch |
| Vergleichsbeispiel 17 | Pigment gemäß Vergleichsbeispiel 3 | brillant, metallisch | 59,3 | 1,9 | 2,2 | gering |
| Vergleichsbeispiel 18 | Pigment gemäß Vergleichsbeispiel 4 | dunkel, bräunlich | 48,1 7 | 0,41 | 0,0 | sehr hoch |

Bei den Pulverlacken des Beispiels 16 und des Vergleichsbeispiels 18 wurden hohe bis sehr hohe Abriebbeständigkeiten erhalten. Diese Tatsache ist messtechnisch an den vergleichweise niedrigeren ΔL*-Werten ersichtlich. Ein Vergleich der farbmetrischen Eigenschaften zeigte jedoch, das hohe Helligkeiten L* und Farbstärken C* nur bei Beispiel 16 und Vergleichsbeispiel 17 erhalten werden. Jedoch ist die Abriebbeständigkeit bei Vergleichsbeispiel 17 gering. Die Pigmente des Vergleichsbeispiels 4 sind im Pulverlack nach dem Vermahlschritt des Extrudats zu einem großen Teil zerstört worden. Da diese Pigmente keine leafing-Eigenschaften aufweisen, entsteht letztendlich ein optischer Eindruck, der kaum metallisch nennen zu ist.

Demnach weisen nur die erfindungsgemäßen Pigmente mit Metalloxidbeschichtung sowie mit einer Oberflächenmodifizierung, die Polysiloxane aufweist, sowohl eine ansprechende Optik (hohe Helligkeit, hohe Brillanz) als auch eine gute Abriebbeständigkeit auf.

### Beispiele 19 bis 25 und Vergleichsbeispiele 26 - 29:

Zur Herstellung eines mit Aluminiumpigmenten pigmentierten Pulverlackes wurden 100 g eines Aluminiumpigmentes gemäß nachstehender Tabelle 2 mit 900 g eines handelsüblichen Pulverklarlackes (AL96 von DuPont) gemischt und mit Hilfe eines Schneckenextruders bei 120 °C extrudiert. Das Extrudat wurde in Stücke gebrochen und mittels einer Prallfutter-Mühle zu einem Pulverlack verarbeitet. Die Applikation des Pulverlackes erfolgte auf Q-Panels (Einbrenn-Temperatur: 200 °C, Einbrenndauer: 10 min). Die farbmetrische Vermessung der Pulverlackapplikation erfolgte mit einem Farbmessgerät CM-508i der Fa. Minolta.

Die Abriebbeständigkeit wurde mit einem Gerät der Fa. Braive Instruments, Typ Washability durchgeführt. Dazu wurde der Metallschlitten, welcher über die zu prüfende Lackoberfläche mit der Geschwindigkeitseinstellung Stufe 1 fährt, mit einer Gummischicht modifiziert. Als Reibpartner wurde schwarzes Papier verwendet, das unterhalb des modifizierten Metallschlittens gelegt wurde. Als Qualitätsmerkmal wurde der Helligkeitsunterschied (ΔL*) zwischen Ausgangzustand und dem Zustand nach 20 Doppel-Hüben sowohl auf dem schwarzen Papier sowie auf dem Blech gemessen.

**Tabelle 2:**

| **Beispiel** | **Verwendetes Pigment** | **Optik** (subjektiver Eindruck) | **L*** | **ΔL* Blech** | **ΔL* Papier** | **AbriebBeständigkeit** |
|---|---|---|---|---|---|---|
| Beispiel 19 | Pigment gemäß Beispiel 5 | brillant, metallisch | 76,7 | 0,22 | 2,04 | hoch |
| Beispiel 20 | Pigment gemäß Beispiel 6 | brillant, metallisch | 79,6 | 0,3 | 2,5 | hoch |
| Beispiel 21 | Pigment gemäß Beispiel 7 | brillant, metallisch | 80,3 | 0,3 | 2,4 | hoch |
| Beispiel 22 | Pigment gemäß Beispiel 8 | brillant, metallisch | 78,1 | 0,2 | 3,3 | hoch |
| Beispiel 23 | Pigment gemäß Beispiel 9 | brillant, metallisch | 73,0 | 0 | 1,0 | sehr hoch |
| Beispiel 24 | Pigment gemäß Beispiel 10 | brillant, metallisch | 73,9 | 0 | 1,1 | hoch |
| Beispiel 25 | Pigment gemäß Beispiel 11 | brillant, metallisch | 75,4 | 0 | 1,8 | hoch |
| Vergleichsbeispiel 26 | Pigment gemäß Vergleichsbeispiel 12 | brillant, metallisch | 75,84 | 0,58 | 6,83 | gering |
| Vergleichsbeispiel 27 | Pigment gemäß Vergleichsbeispiel 13 | dunkel, grau | 53,86 | 0 | 0 | sehr hoch |
| Vergleichsbeispiel 28 | Pigment gemäß Vergleichsbeispiel 14 | dunkel, grau | 54,71 | 0,14 | 0,79 | hoch |
| Vergleichsbeispiel 29 | Pigment gemäß Vergleichsbeispiel 15 | dunkel, grau | 54 | 0 | 0 | sehr hoch |

Die Werte der Tab. 2 belegen, dass die erfindungsgemäße Metalleffektpigmente enthaltenden Pulverlackapplikationen eine wesentlich bessere Optik hinsichtlich metallischer Brillanz und Helligkeit als auch eine bessere Abriebbeständigkeit aufwiesen als Pulverlacke mit herkömmlichen Metalleffektpigmenten ohne eine Polysiloxan- Oberflächenmodifizierung.

Weiterhin weist die Pulverapplikation gemäß Vergleichsbeispiel 27, bei dem ein Pulverlack, der ein mit Polysiloxan behandeltes Aluminiumpigment, welches keine Metalloxidschicht aufweist, verwendet wurde, keine guten optischen Eigenschaften auf. Ähnliche Ergebnisse zeigten die Vergleichsbeispiele 28 und 29, bei denen die Effektpigmente nur eine Metalloxidschicht aufwiesen. Vergleichbeispiele 27 - 29 verdeutlichen, dass bei Pigmentpräparationen, die nicht sowohl eine Metalloxidschicht als auch eine Polysiloxan-Oberflächenmodifizierung enthalten, das Metallpigment so schwer durch die auftretenden mechanischen Kräfte bei der Extrusion und nachfolgend bei der Vermahlung geschädigt werden, dass keine ansprechenden optischen Eigenschaften mehr erhalten werden.

Das mit Alkylsilan behandelten Aluminiumpigment zeigte im Pulverlack zwar gute optische Eigenschaften, die durch das Aufschwimmen von mechanisch weitgehend unbeschädigten Pigmenten hervorgerufen werden. In diesem Fall war jedoch die Abriebbeständigkeit gering (Vergleichsbeispiel 26).

Nur die erfindungsgemäßen Pigmente (bzw. deren Pulverlacke) wiesen mithin die Kombination einer guten, ansprechenden Optik und hoher bis sehr hoher Abriebbeständigkeit auf.

## Patentansprüche

1. Metalleffektpigmente mit plättchenförmigem metallischen Substrat, wobei die Metalleffektpigmente mindestens eine Metalloxidschicht aufweisen,
**dadurch gekennzeichnet,**
**dass** die Oberfläche der Metalloxidschicht kovalent gebundenes Polysiloxan der Formel aufweist: 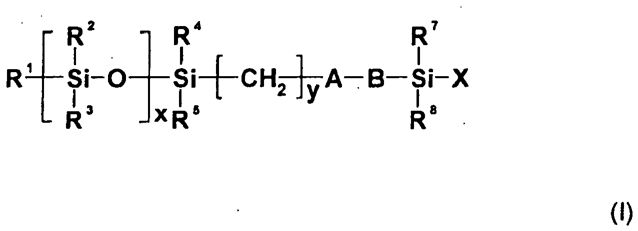 wobei
R¹ für einen gesättigten oder ungesättigten, geradkettigen oder verzweigten Alkylrest mit 1 bis 30 Kohlenstoffatomen und/oder einen Arylrest, Alkylarylrest oder Arylalkylrest mit 6 bis 30 Kohlenstoffatomen steht;
R², R³, R⁴ und R⁵ unabhängig voneinander für gesättigte oder ungesättigte, geradkettige oder verzweigte Alkylreste mit 1 bis 6 Kohlenstoffatomen und/oder Arylreste, Alkylarylreste und/oder Arylalkylreste mit 6 bis 12 Kohlenstoffatomen stehen;
x = 1 bis 200;
y = 2 bis 30;
A für (CH₂)ₙ, O, S, (OCH₂CH₂)ₘ oder C₆R⁶₄ steht, wobei n = 0 oder 1 und m = 0 bis 30 und R⁶ für H und/oder Alkyl mit 1 bis 6 Kohlenstoffatomen steht;
B für (CH₂)_{z} oder (OCH₂CH₂)_{w} steht, wobei z = 0 bis 30 und w = 0 bis 30; und
R⁷ und R⁸ unabhängig voneinander für O oder einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen stehen, wobei X für O oder OH steht und an die Pigmentoberfläche gebunden ist.

2. Metalleffektpigmente nach Anspruch 1,
**dadurch gekennzeichnet,**
**dass** die Metalloxidbeschichtung das plättchenförmige Substrat im wesentlichen umhüllt, wobei die umhüllende Metalloxidbeschichtung vorzugsweise Oxide und/oder Oxidhydrate von Silizium, Titan, Zirkon, Eisen, Aluminium, Cer, Chrom und/oder Mischungen davon enthält oder daraus besteht.

3. Metalleffektpigmente nach Anspruch 1 oder 2,
**dadurch gekennzeichnet,**
**dass** R², R³, R⁴ und R⁵ unabhängig voneinander für gesättigte Alkylreste stehen und vorzugsweise aus der Gruppe, die aus Methyl, Ethyl, n-Propyl, Isopropyl, n-Butyl, sec-Butyl und tert.-Butyl besteht, ausgewählt werden und/oder für einen aromatischen Rest, vorzugsweise Phenyl, stehen.

4. Metalleffektpigmente nach einem der Anspruch 3,
**dadurch gekennzeichnet,**
**dass** R², R³, R⁴ und R⁵ für Methyl stehen.

5. Metalleffektpigmente nach einem der vorstehenden Ansprüche,
**dadurch gekennzeichnet,**
**dass** R¹ für Methyl, Ethyl, sec.-Butyl, n-Propyl, Isopropyl, n-Butyl, sec-Butyl, tert.-Butyl, n-Pentyl, Neopentyl, Cyclopentyl, n-Hexyl, Cyclohexyl, n-Octyl, 2-Ethylhexyl, Phenyl, Methylphenyl oder Ethylphenyl steht.

6. Metalleffektpigmente nach einem der vorstehenden Ansprüche,
**dadurch gekennzeichnet,**
**dass** y =2 bis 6 ist und A für (CH₂)ₙ steht, wobei n = 0, und B für (OCH₂CH₂)_{w} steht, wobei w = 0 bis 6.

7. Metalleffektpigmente nach einem der vorstehenden Ansprüche,
**dadurch gekennzeichnet,**
**dass** die Metalleffektigmente einen Metalloxidgehalt von 0,1 bis 50 Gew. -%, bezogen auf das Gesamtgewicht des Metalleffektpigmentes, aufweisen.

8. Metalleffektpigmente nach einem der vorstehenden Ansprüche,
**dadurch gekennzeichnet,**
**dass** die Metalleffektigmente einen Gehalt an Polysiloxan gemäß Formel (I) von 0,1 bis 10 Gew.-%, bezogen auf das Gesamtgewicht des Metalleffektpigmentes, aufweisen.

9. Verfahren zur Herstellung von Metalleffektpigmenten gemäß einem der vorherigen Ansprüche,
**dadurch gekennzeichnet,**
**dass** die Oberfläche der Metalloxidschicht mit einem Polysiloxan der Formel (II) 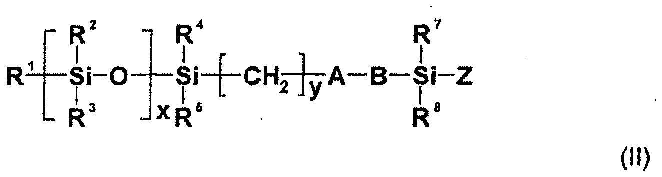 umgesetzt wird, wobei Z für eine hydrolysierbare Gruppe steht und R⁷ und R⁸ unabhängig voneinander jeweils für eine hydrolysierbare Gruppe stehen oder R⁷ und R⁸ unabhängig voneinander für einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen stehen, wobei
R¹ für einen gesättigten oder ungesättigten, geradkettigen oder verzweigten Alkylrest mit 1 bis 30 Kohlenstoffatomen und/oder einen Arylrest, Alkylarylrest oder Arylalkylrest mit 6 bis 30 Kohlenstoffatomen steht;
R², R³, R⁴ und R⁵ unabhängig voneinander für gesättigte oder ungesättigte, geradkettige oder verzweigte Alkylreste mit 1 bis 6 Kohlenstoffatomen und/oder Arylreste, Alkylarylreste und/oder Arylalkylreste mit 6 bis 12 Kohlenstoffatomen stehen;
x = 1 bis 200;
y = 2 bis 30;
A für (CH₂)ₙ, O, S, (OCH₂CH₂)ₘ oder C₆R⁶₄ steht, wobei n = 0 oder 1 und m = 0 bis 30 und R⁶ für H und/oder Alkyl mit 1 bis 6 Kohlenstoffatomen steht;
B für (CH₂)_{z} oder (OCH₂CH₂)_{w} steht, wobei z = 0 bis 30 und w = 0 bis 30.

10. Verfahren nach Anspruch 9,
**dadurch gekennzeichnet,**
**dass** die hydrolysierbare Gruppe für Halogen, OR⁹ und/oder O(C=O)R⁹ steht, wobei R⁹ für einen gesättigten, geradkettigen oder verzweigten Alkylrest mit 1 bis 6 Kohlenstoffatomen steht, wobei der Alkylrest O enthalten kann.

11. Verwendung von Metalleffektpigmenten gemäß einem der Ansprüche 1 bis 8 in Pulverlacken.

12. Verwendung von Metalleffektpigmenten gemäß einem der Ansprüche 1 bis 8 zur Herstellung von Pulverlacken mittels Mischverfahren, vorzugsweise durch Extrusion einer Mischung von Metalleffektpigmenten und Pulverlack-Bindemittel und anschließender Vermahlung des erhaltenen Extrudats.

13. Pulverlack enthaltend mindestens ein Bindemittel sowie wenigstens ein Metalleffektpigment nach einem der Ansprüche 1 bis 8.

14. Verfahren zur Herstellung eines Pulverlackes,
welches folgende Schritte umfasst:
(a) Mischen, vorzugsweise Extrudieren, eines Metalleffektpigmentes nach einem der Ansprüche 1 bis 8 zusammen mit Bindemittel und optional weiteren Bestandteilen eines Pulverlacks,
(b) optional Vermahlen des in Schritt (a) erhaltenen Extrudats.

15. Verwendung von Pulverlacken gemäß Anspruch 13 zur Lackierung von Substraten, enthaltend Metall, Metallfolien, Kunststoff, Glas, Glasfasern, Verbundwerkstoffe, Keramik, Holz, Beton, Textilmaterial, Holzwerkstoffe.

## Claims

1. Metal effect pigments with a platelet-shaped metallic substrate, the metal effect pigments having at least one metal oxide layer,
**characterised in that**
the surface of the metal oxide layer comprises covalently bonded polysiloxane based on formula I: 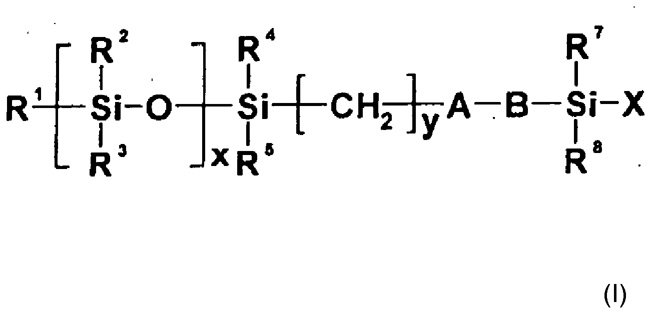 in which
R¹ stands for a saturated or unsaturated, straight-chain or branched alkyl radical having 1 to 30 carbon atoms and/or an aryl radical, alkylaryl radical or arylalkyl radical having 6 to 30 carbon atoms;
R², R³, R⁴ and R⁵ independently of one another stand for saturated or unsaturated, straight-chain or branched alkyl radicals having 1 to 6 carbon atoms and/or aryl radicals, alkylaryl radicals or arylalkyl radicals having 6 to 12 carbon atoms;
x = 1 to 200;
y = 2 to 30;
A stands for (CH₂)ₙ, O, S, (OCH₂CH₂)ₘ or C₆R⁶₄, and n = 0 or 1 and m = 0 to 30 and R⁶ stands for H and/or alkyl having 1 to 6 carbon atoms;
B stands for (CH₂)_{z} or (OCH₂CH₂)_{w}, and z = 0 to 30 and w = 0 to 30; and
R⁷ and R⁸ independently of one another stand for O or a saturated or unsaturated, straight-chain or branched alkyl radical having 1 to 6 carbon atoms and/or an aryl radical, alkylaryl radical or arylalkyl radical having 6 to 9 carbon atoms, and X stands for O or OH and is bonded to the pigment surface.

2. Metal effect pigments as claimed in claim 1,
**characterised in that**
the metal oxide coating essentially encloses the platelet-shaped substrate and the enclosing metal oxide coating preferably contains or comprises oxides and/or oxide hydrates of silicon, titanium, zirconium, iron, aluminium, cerium, chromium and/or mixtures thereof.

3. Metal effect pigments as claimed in claim 1 or 2,
**characterised in that**
R², R³, R⁴ and R⁵ independently of one another stand for saturated alkyl radicals and are preferably selected from the group comprising methyl, ethyl, n-propyl, isopropyl, n-butyl, sec.-butyl and tert.-butyl, and/or stand for an aromatic radical, preferably phenyl.

4. Metal effect pigments as claimed in claim 3,
**characterised in that**
R², R³, R⁴ and R⁵ stand for methyl.

5. Metal effect pigments as claimed in one of the preceding claims,
**characterised in that**
R¹ stands for methyl, ethyl, sec.-butyl, n-propyl, isopropyl, n-butyl, sec.-butyl, tert.-butyl, n-pentyl, neopentyl, cyclopentyl, n-hexyl, cyclohexyl, n-octyl, 2-ethylhexyl, phenyl, methylphenyl or ethylphenyl.

6. Metal effect pigments as claimed in one of the preceding claims,
**characterised in that**
y = 2 to 6 and A stands for (CH₂)ₙ, and n = 0, and B stands for (OCH₂CH₂)_{w}, and w = 0 to 6.

7. Metal effect pigments as claimed in one of the preceding claims,
**characterised in that**
the metal effect pigments have a metal oxide content of 0.1 to 50 % by weight relative to the total weight of the metal effect pigment.

8. Metal effect pigments as claimed in one of the preceding claims,
**characterised in that**
the metal effect pigments have a content of polysiloxane based on formula (I) of 0,1 to 10 % by weight relative to the total weight of the metal effect pigment.

9. Method of producing metal effect pigments as claimed in one of the preceding claims,
**characterised in that**
the surface of the metal oxide layer is reacted with a polysiloxane based on formula (II) 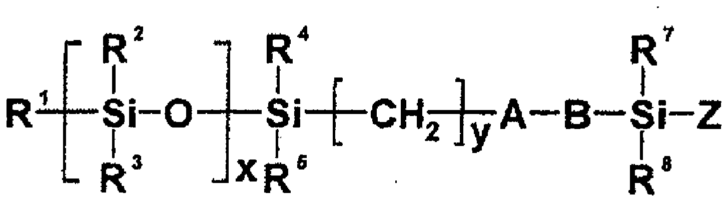 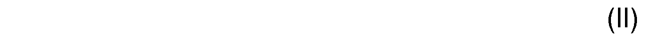 and Z stands for a hydrolysable group and R⁷ and R⁸ independently of one another respectively stand for a hydrolysable group or R⁷ and R⁸ independently of one another stand for a saturated or unsaturated, straight-chain or branched alkyl radical having 1 to 6 carbon atoms and/or an aryl radical, alkylaryl radical or arylalkyl radical having 6 to 9 carbon atoms,
and R¹ stands for a saturated or unsaturated, straight-chain or branched alkyl radical having 1 to 30 carbon atoms and/or an aryl radical, alkylaryl radical or arylalkyl radical having 6 to 30 carbon atoms;
R², R³, R⁴ and R⁵ independently of one another stand for saturated or unsaturated, straight-chain or branched alkyl radicals having 1 to 6 carbon atoms and/or aryl radicals, alkylaryl radicals and/or arylalkyl radicals having 6 to 12 carbon atoms;
x = 1 to 200;
y = 2 to 30;
A stands for (CH₂)ₙ, O, S, (OCH₂CH₂)ₘ or C₆R⁶₄, and n = 0 or 1 and m = 0 to 30 and R⁶ stands for H and/or alkyl having 1 to 6 carbon atoms;
B stands for (CH₂)_{z} or (OCH₂CH₂)_{w}, and z = 0 to 30 and w = 0 to 30.

10. Method as claimed in claim 9,
**characterised in that**
the hydrolysable group stands for halogen, OR⁹ and/or O(C=O)R⁹, and R⁹ stands for a saturated, straight-chain or branched alkyl radical having 1 to 6 carbon atoms, and the alkyl radical may contain O.

11. Use of metal effect pigments as claimed in one of claims 1 to 8 in powder coatings.

12. Use of metal effect pigments as claimed in one of claims 1 to 8 for producing powder coatings by means of a mixing process, preferably by extruding a mixture of metal effect pigments and powder coating binding agent and then milling the resultant extrudate.

13. Powder coating containing at least one binding agent as well as at least one metal effect pigment as claimed in one of claims 1 to 8.

14. Method of producing a powder coating,
comprising the following steps:
(a) mixing, preferably extruding, a metal effect pigment as claimed in one of claims 1 to 8 together with binding agent and optionally other constituents of a powder coating,
(b) optionally milling the extrudate obtained in step (a).

15. Use of powder coatings as claimed in claim 13 for coating substrates, containing metal, metal foils, plastic, glass, glass fibres, composite materials, ceramic, wood, concrete, textile material, wood-based materials.

## Revendications

1. Pigments métalliques à effets comportant un substrat métallique lamellaire, les pigments métalliques à effets présentant au moins une couche d'oxyde métallique, **caractérisés en ce que** la surface de la couche d'oxyde métallique comprend un polysiloxane, lié par liaison covalente, de formule (I) 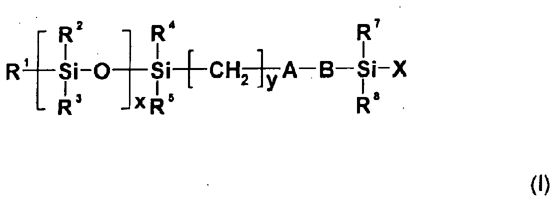 dans laquelle
R¹ représente un radical alkyle saturé ou insaturé, à chaîne droite ou ramifiée, ayant 1 à 30 atomes de carbone, et/ou un radical aryle, un radical alkylaryle ou un radical arylalkyle ayant 6 à 30 atomes de carbone ;
R², R³, R⁴ et R⁵ représentent chacun indépendamment des autres un radical alkyle saturé ou insaturé, à chaîne droite ou ramifiée, ayant 1 à 6 atomes de carbone, et/ou un radical aryle, un radical alkylaryle et/ou un radical arylalkyle ayant 6 à 12 atomes de carbone ;
x = 1 à 200 ;
y = 2 à 30;
A représente (CH₂)ₙ, O, S, (OCH₂CH₂)ₘ ou C₆R⁶₄, où n = 0 ou 1 et m = 0 à 30, et R⁶ représente H et/ou un radical alkyle ayant 1 à 6 atomes de carbone ;
B représente (CH₂)_{z} ou (OCH₂CH₂)_{w}, où z = 0 à 30 et w = 0 à 30 ; et
R⁷ et R⁸ représentent chacun indépendamment de l'autre O ou un radical alkyle saturé ou insaturé, à chaîne droite ou ramifiée, ayant 1 à 6 atomes de carbone, et/ou un radical aryle, un radical alkylaryle ou un radical arylalkyle ayant 6 à 9 atomes de carbone, X représentant O ou OH et étant lié à la surface du pigment.

2. Pigments métalliques à effets selon la revendication 1, **caractérisés en ce que** le revêtement d'oxyde métallique enveloppe pour l'essentiel le substrat lamellaire, le revêtement d'oxyde métallique enveloppant contenant de préférence des oxydes et/ou des hydroxydes de silicium, de titane, de zirconium, de fer, d'aluminium, de cérium, de chrome et/ou des mélanges de ceux-ci, ou en est constitué.

3. Pigments métalliques à effets selon la revendication 1 ou 2, **caractérisés en ce que** R², R³, R⁴ et R⁵ représentent chacun indépendamment des autres un radical alkyle saturé, et de préférence sont choisis dans le groupe consistant en les groupes méthyle, éthyle, n-propyle, isopropyle, n-butyle, sec-butyle et tert-butyle, et/ou un radical aromatique, de préférence phényle.

4. Pigments métalliques à effets selon la revendication 3, **caractérisés en ce que** R², R³, R⁴ et R⁵ représentent des groupes méthyle.

5. Pigments métalliques à effets selon l'une des revendications précédentes, **caractérisés en ce que** R¹ représente le groupe méthyle, éthyle, sec-butyle, n-propyle, isopropyle, n-butyle, sec-butyle, tert-butyle, n-pentyle, néopentyle, cyclopentyle, n-hexyle, cyclohexyle, n-octyle, 2-éthylhexyle, phényle, méthylphényle ou éthylphényle.

6. Pigments métalliques à effets selon l'une des revendications précédentes, **caractérisés en ce que** y = 2 à 6 et A représente (CH₂)ₙ, avec n = 0 et B représentant (OCH₂CH₂)_{w}, où w = 0 à 6.

7. Pigments métalliques à effets selon l'une des revendications précédentes, **caractérisés en ce que** les pigments métalliques à effets présentent une teneur en oxyde métallique de 0,1 à 50 % en poids, par rapport au poids total du pigment métallique à effets.

8. Pigments métalliques à effets selon l'une des revendications précédentes, **caractérisés en ce que** les pigments métalliques à effets présentent une teneur en polysiloxane selon la formule (I) de 0,1 à 10 % en poids par rapport au poids total du pigment métallique à effets.

9. Procédé de fabrication de pigments métalliques à effets selon l'une des revendications précédentes, **caractérisé en ce qu'**on fait réagir la surface de la couche d'oxyde métallique avec un polysiloxane de formule (II) 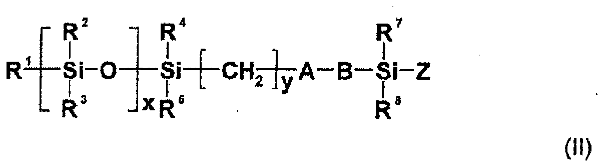 dans laquelle Z représente un groupe hydrolysable, et R⁷ et R⁸ représentent chacun indépendamment de l'autre un groupe hydrolysable, ou R⁷ et R⁸ représentent chacun indépendamment de l'autre un radical alkyle saturé ou insaturé, à chaîne droite ou ramifiée, ayant 1 à 6 atomes de carbone, et/ou un radical aryle, alkylaryle ou arylalkyle ayant 6 à 9 atomes de carbone, dans laquelle
R¹ représente un radical alkyle saturé ou insaturé, à chaîne droite ou ramifiée, ayant 1 à 30 atomes de carbone, et/ou un radical aryle, un radical alkylaryle ou un radical arylalkyle ayant 6 à 30 atomes de carbone ;
R², R³, R⁴ et R⁵ représentent chacun indépendamment des autres un radical alkyle saturé ou insaturé, à chaîne droite ou ramifiée, ayant 1 à 6 atomes de carbone, et/ou un radical aryle, un radical alkylaryle et/ou un radical arylalkyle ayant 6 à 12 atomes de carbone ;
x = 1 à 200 ;
y = 2 à 30;
A représente (CH₂)ₙ, O, S, (OCH₂CH₂)ₘ ou C₆R⁶₄, où n = 0 ou 1 et m = 0 à 30, et R⁶ représente H et/ou un radical alkyle ayant 1 à 6 atomes de carbone ;
B représente (CH₂)_{z} ou (OCH₂CH₂)_{w}, où z = 0 à 30 et w = 0 à 30.

10. Procédé selon la revendication 9, **caractérisé en ce que** le groupe hydrolysable représente un groupe halogéno, OR⁹ et/ou O(C=O)R⁹, R⁹ représentant un radical alkyle saturé, à chaîne droite ou ramifiée, ayant 1 à 6 atomes de carbone, le radical alkyle pouvant contenir O.

11. Utilisation de pigments métalliques à effets selon l'une des revendications 1 à 8 dans des peintures en poudre.

12. Utilisation de pigments métalliques à effets selon l'une des revendications 1 à 8 pour la fabrication de peintures en poudre par des procédés de mélange, de préférence par extrusion d'un mélange de pigments métalliques à effets et d'un liant pour peintures en poudre, suivie d'un broyage de l'extrudat obtenu.

13. Peinture en poudre contenant au moins un liant, ainsi qu'au moins un pigment métallique à effets selon l'une des revendications 1 à 8.

14. Procédé de fabrication d'une peinture en poudre, comprenant les étapes suivantes :
(a) mélange, de préférence extrusion, d'un pigment métallique à effets selon l'une des revendications 1 à 8, en même temps que d'un liant et en option d'autres constituants d'une peinture en poudre,
(b) en option, broyage de l'extrudat obtenu dans l'étape (a).

15. Utilisation de peintures en poudre selon la revendication 13 pour peindre des substrats contenant un métal, des feuilles métalliques, du plastique, du verre, des fibres de verre, des matériaux composites, de la céramique, du bois, du béton, un matériau textile, des matériaux à base de bois.
